# EUROPEAN PATENT SPECIFICATION

(11) **EP 3 258 095 B1**
(45) Date of publication and mention of the grant of the patent: **31.07.2019**
(21) Application number: 17176558.9
(22) Date of filing: 19.06.2017
(51) Int. Cl.: F02M 26/54, F02M 26/67, F16K 31/528, H02K 7/075, H02K 7/116

(54) **EGR VALVE FOR VEHICLES**
EGR-VENTIL FÜR FAHRZEUGE
SOUPAPE EGR POUR VÉHICULES

(30) Priority: 18.06.2016 KR 20160076171; 18.06.2016 KR 20160076172; 18.06.2016 KR 20160076173; 18.06.2016 KR 20160076174; 10.05.2017 KR 20170057968; 24.05.2017 KR 20170063907
(43) Date of publication of application: 20.12.2017
(73) Proprietor: Kamtec, Inc., Chungcheongbuk-do 27818 (KR)
(72) Inventor: PARK, Chan Woo, 18449 Gyeonggi-do (KR); KIM, Sung Kun, 18449 Gyeonggi-do (KR); KOO, Jun Suek, 18449 Gyeonggi-do (KR); LEE, Jeong Rak, 18449 Gyeonggi-do (KR); RYU, Dong Han, 18449 Gyeonggi-do (KR); LEE, Sung Joo, 18449 Gyeonggi-do (KR)
(74) Representative: Zardi, Marco

(56) References cited:
- EP-A2- 2 884 086
- WO-A1-2015/036332
- DE-A1-102013 220 721
- KR-B1- 101 225 681
- US-A- 4 983 797

## Description

### BACKGROUND OF THE INVENTION

### Field of the Invention

Apparatuses and methods consistent with the present invention relate to an exhaust gas recirculation (EGR) valve for vehicles, and more particularly, an EGR valve having excellent structural stability as well as a simplified internal structure.

### Description of the Related Art

In general, in order to prevent nitrogen oxide (NOₓ) from being generated from exhaust gas discharged from an engine installed in a vehicle, a method that has been currently most commonly used is an exhaust gas recirculation (EGR) valve for adding a portion of cooled exhaust gas to a mixer and inserting the exhaust gas to a cylinder.

A structure of the EGR valve is disclosed in Korean Patent No. 10-1225681.

The EGR valve may be configured to include a housing with an inlet and an outlet formed therein, a valve device for selectively opening and closing the inlet, and an actuator for causing reciprocating motion of the valve device.

A power train device for transmitting power may be disposed between the valve device and the actuator and may include a plurality of gear modules and a cam, and the valve device may be connected to the cam.

In the case of the prior art, a pinion gear, a power train gear, a partial tooth gear with an output shaft inserted thereinto, and a cam unit coupled to the output shaft have complicated configurations and, accordingly, there is a limit in reducing the overall size and costs of the EGR valve.

In the case of the prior art, a valve stem and a cam which are included in the valve device are spaced apart from each other. In this structure, upon moving up and down, the valve stem frequently rotates in right and left directions based on a vertical axis.

When the valve stem rotates in right and left directions as well as moves in a vertical direction, there is a problem in that it is difficult to accurately measure a height and a position of the valve stem.

In the case of the prior art, a driving motor is disposed in the housing and a separate fixing plate for fixing the driving motor is provided.

However, there is a problem in that a position deviation of a motor shaft is increased due to a fine interval and, thus, a position deviation of a gear coupled to the motor shaft is increased. In addition, this causes mismatch between the pinion gear and the power train gear to generate backlash or frictional resistance.

Lastly, there is a problem in that overall operability of the EGR valve is degraded and noise is generated.

In the case of the prior art, the valve device includes a valve stem that includes an upper stem and a lower stem.

The upper stem and the lower stem are generally coupled via welding and, in this regard, the lower stem is shaped like a cylinder and a welding area is small and, accordingly, welding coupling is frequently unstable.

In the case of the prior art, a magnet for measuring an opening degree of a valve is installed in a gear and, thus, when a gear malfunctions or lash occurs, there is a problem in that an actual opening degree is not reflected.

In the case of the prior art, a roller of the valve device does relative motion with respect to a cam groove along the cam grooved formed in the cam.

However, the roller is formed of a metallic material and the cam is formed of a plastic material and, accordingly, when continuous contact motion is performed between the roller and the cam groove, a surface of the cam groove is rasped and, accordingly, fine particles or particle type impurities are generated to impede motion of the roller.

In the case of the prior art, a moving path through which the valve stem moves is provided in a housing, and the valve stem is disposed through the moving path and a sealing member for preventing gas from flowing toward an actuator is provided in the moving path.

However, when the sealing member is worn or damaged or a long time elapses, a sealing function is remarkably degraded and exhaust gas moves toward the driving motor and, thus, there is a problem in that driving is impeded.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to the present invention there is provided an exhaust gas recirculation (EGR) valve according to claim 1. Further embodiments of the present invention are defined by the dependent claims.

Disclosed is a coupling structure of a power train gear and a cam structure so as to selectively install cams with various specifications.

Further disclosed is an exhaust gas recirculation (EGR) valve for vehicles, for simplifying a conventional complicated structure so as to directly connect a power train gear connected to a cam structure and a pinion gear of a motor shaft.

The present disclosure also relates to an EGR valve for vehicles, for preventing a valve unit from rotating based on a vertical axis to effectively open and close a valve and to enhance the accuracy of measurement of a degree of opening the valve.

The present disclosure also relates to an EGR valve for vehicles, for more stably fixing a driving motor to a housing, preventing a position deviation in a driving motor shaft, a pinion gear connected thereto, and a power train gear, and preventing vibration noise.

The present disclosure also relates to an EGR valve for vehicles, for stably coupling an upper stem and a lower stem and providing an installation position of a magnet for more accurately measuring a position of a valve.

The present disclosure also relates to an EGR valve for vehicles and a cam gear assembly for the EGR value, for rapidly and externally discharging impurities in a cam groove.

As disclosed, a driving motor or other elements connected thereto may be prevented from being contaminated by exhaust gas or operation interruption by providing a separate gas exhaust channel in a housing as well as providing a dual sealing member in the housing.

According to an aspect as disclosed, an exhaust gas recirculation (EGR) valve for vehicles comprises; a housing comprising an EGR channel formed therein; a driving motor and a motor shaft provided in the housing; a pinion gear disposed at the motor shaft; a power train gear comprising a tooth formed on an outer edge and engaged with the pinion gear; and a cam unit coupled to the power train gear and rotating along with the power train gear, wherein the EGR channel is selectively opened and closed via up and down movement in response to rotation of the cam unit.

The EGR valve further comprise an inserting portion formed in the power train gear; and a protrusion portion formed on one surface of the cam unit and inserted into the insertion portion, wherein the protrusion portion is coupled and fixed by heat while being inserted into the inserting portion.

A structure with the protrusion portion inserted thereinto is formed around the inserting portion to reinforce a fixing state via thermal fusion and torsional rigidity.

The EGR valve further comprises a spacer step difference portion disposed around the protrusion portion and configured to space a surface of the power train gear and a surface of the cam unit apart from each other.

The EGR valve further comprises an auxiliary spacer step difference portion formed on the surface of the cam unit or the surface of the power train gear, spaced apart from the spacer step difference portion, and provided in the same height level as the spacer step difference portion.

The EGR valve further comprises a valve stem comprising a roller accommodated on a cam groove of the cam unit, wherein a contact state between the cam unit and the valve stem is maintained; and an elastic member disposed between the housing and the power train gear and configured to provide elastic restoring force during rotation of the power train gear, wherein the elastic member is compressed and disposed between the housing and the power train gear and presses a surface of the power train gear to maintain a contact state between the cam unit and the valve stem.

The elastic member comprises: a body portion comprising a coil spring; a first extension portion provided at one end portion of the body portion and fixed to the power train gear; second extension portion provided at the other end portion of the body portion and fixed to the housing, herein the body portion is maintained to be compressed between the housing and the power train gear and the power train gear receives force in a direction toward the valve stem in response to elastic reaction based on compression.

The cam unit further comprises an extension portion formed on an outer edge of the cam groove and extending forward; and the extension portion continuously contacts a flat portion formed on an upper stem included in the valve stem; and the extension portion contacts the upper stem without unsticking from one end of the flat portion of the upper stem to the other end and prevents the upper stem from rotating based on a virtual vertical axis of the upper stem.

The valve stem comprises an upper stem comprising a rotation shaft with a roller inserted thereinto and a lower stem coupled to a lower portion of the upper stem and comprising a valve plate coupled to the lower stem; and a vertical center of the roller and a vertical center of the lower stem match each other.

The upper stem comprises an upper region having a flat surface that surface-contacts the cam member as the roller is inserted into the rotation shaft and a lower region comprising a bent portion connected to the upper region and coupled to the lower stem; and the bent portion of the lower region is disposed in an inner portion toward the power train gear compared with the upper region.

The EGR valve further comprises a fixing plate coupled to the driving motor, coupled to an internal surface of the housing, and configured to fix the driving motor to a motor accommodation portion , wherein the fixing plate comprises a through hole through which a central portion of the driving motor is disposed and a support formed around the through hole to contact the driving motor.

The fixing plate comprises: a plate portion with a through hole formed in a center thereof; a bent portion extending from an edge of the plate portion, bent downward, and formed on a front surface of the driving motor; and an extension portion formed adjacently to the bent portion and inserted into a fixing groove formed on the internal surface of the housing.

The extension portion comprises a first extension portion extending toward one side of the plate portion, and a second extension portion extending toward the other side of the plate portion; the first extension portion and the second extension portion are different in a shape or an extension length and are asymmetrical based on a center of the through hole; and a region of the fixing groove, to which the first extension portion is installed, and a region of the fixing groove, to which the second extension portion is installed, are asymmetrical based on a center of the fixing groove.

The EGR valve further comprises a valve stem, the valve stem comprises an upper stem and a lower stem engaged with the upper stem and including a valve plate provided on a lower portion of the lower stem; a lower region of the upper stem, engaged with the lower stem, is bent toward one side compared with an upper region; and a first coupling groove and a second coupling groove are engaged with each other below the upper stem and above the lower stem.

A lower portion of the first coupling groove formed below the upper stem is opened; an extension portion extending toward the first coupling groove is formed at one side of the first coupling groove; and the extension portion and the second coupling groove surface-contact each other.

The EGR valve further comprises: a through hole formed in an upper region of the upper stem; and a magnet configured to indicate a state and position of a stem disposed in the thorough hole.

The EGR valve further comprises an impurity outlet disposed in the cam unit and configured to connect internal and external portions of a cam groove to guide impurity in the cam groove to be externally discharged.

The EGR valve further comprises a valve stem moveably provided in the housing; a first sealing member installed in the housing and disposed to surround the valve stem; and a second sealing member installed in the housing, disposed to surround the valve stem, and disposed above the first sealing member.

The EGR valve further comprises a gas exhaust channel disposed at one side of the housing and configured to discharge gas directed toward a valve driver out of the housing, wherein an arrangement height level of the gas exhaust channel is between an arrangement height level of the first sealing member and an arrangement height level of the second sealing member.

### BRIEF DESCRIPTION OF THE DRAWING FIGURES

The above and/or other aspects of the present invention will be more apparent by describing certain exemplary embodiments of the present invention with reference to the accompanying drawings, in which:
FIG. 1 is a perspective view of an exhaust gas recirculation (EGR) valve for vehicles according to the present application;
FIG. 2 is an exploded perspective view of an EGR valve for vehicles according to the present application;
FIG. 3 is an exploded perspective view of a cam unit and a power train gear for an EGR valve for vehicles according to the present application;
FIG. 4 is a front view showing the case in which a cam unit and a power train gear for an EGR valve for vehicles are coupled according to the present application;
FIG. 5 is a set of lateral cross-sectional views showing the case in which a cam unit and a power train gear for an EGR valve for vehicles are coupled according to the present application;
FIG. 6 is a set of front views of a valve unit in which a cam unit and a power train gear for an EGR valve for vehicles are coupled according to the present application;
FIG. 7 is a lateral cross-sectional view of a valve unit connected to a cam unit and a power train gear for an EGR valve for vehicles according to the present application;
FIG. 8 is an exploded perspective view of a valve unit of an EGR valve for vehicles according to the present application;
FIG. 9 is a partial side view and a perspective view of a valve unit of an EGR valve for vehicles according to the present application;
FIG. 10 is a front view and a side view of a valve unit of an EGR valve for vehicles according to the present application;
FIG. 11 is a perspective view and a front view of a motor fixing plate of an EGR valve for vehicles according to the present application;
FIG. 12 is a front view and a side view of a motor fixing plate and a motor of an EGR valve for vehicles according to the present application;
FIG. 13 is a front view of a fixing plate and a motor installed on a front surface of a housing of an EGR valve for vehicles according to the present application;
FIG. 14 is a perspective view of an EGR valve for vehicles according to another embodiment of the present application;
FIG. 15 is an exploded perspective view of an EGR valve for vehicles according to another embodiment of the present application;
FIG. 16 is a lateral cross-sectional view of an EGR valve for vehicles with a second sealing member installed application;
FIG. 17 is an enlarged lateral cross-sectional view of an EGR valve for vehicles with a second sealing member installed application;
FIG. 18A is an upper perspective view of a second sealing member;
FIG. 18B is a lower perspective view of a second sealing member;
FIG. 18C is a lateral cross-sectional view of a second sealing member;
FIG. 19 is a lateral cross-sectional view of an EGR valve for vehicles according to another embodiment as disclosed;
FIG. 20 is an enlarged lateral cross-sectional view of an EGR valve for vehicles with a second sealing member installed therein according to another embodiment as disclosed;
FIG. 21A is an upper perspective view of a second sealing member according to another embodiment as disclosed;
FIG. 21B is a lower perspective view of a second sealing member according to another embodiment as disclosed;
FIG. 21C is a lateral cross-sectional view of a second sealing member according to another embodiment as disclosed;
FIG. 22A is a lateral cross-sectional view of the case before a deformed portion is formed in a second sealing member according to a modified embodiment as disclosed;
FIG. 22B is a lateral cross-sectional view of the case after a deformed portion is formed according to a modified embodiment as disclosed;
FIG. 23 is an exploded perspective view of a cam unit and a power train gear for an EGR valve for vehicles according to the present application;
FIG. 24 is a front view showing the case in which a cam unit and a power train gear for an EGR valve for vehicles are coupled according to the present application;
FIG. 25 is a lateral cross-sectional view showing the case in which a cam unit and a power train gear for an EGR valve for vehicles are coupled and an impurity outlet is formed according to the present application;
FIG. 26 is a front view showing an operation of a valve unit connected to a cam unit and a power train gear for an EGR valve for vehicles according to the present application; and
FIG. 27 is a lateral cross-sectional view showing the case in which impurities are discharged through an impurity outlet during an operation of a valve unit connected to a cam unit and a power train gear for an EGR valve for vehicles according to the present application.

### DETAILED DESCRIPTION OF THE EXEMPLARY EMBODIMENTS

The attached drawings for illustrating exemplary embodiments as disclosed are referred to in order to gain a sufficient understanding of the present invention, the merits thereof, and the objectives accomplished by the implementation of the present invention

The invention may, however, be embodied in many different forms and should not be construed as being limited to the embodiments set forth herein; rather, these embodiments are provided so that this disclosure will be thorough and complete, and will fully convey the concept of the invention to those skilled in the art.

The terms used in the embodiments of the present invention are provided to aid in the understanding of the present invention and not intended to limit the present invention.

An expression used in the singular encompasses the expression of the plural, unless it has a clearly different meaning in the context. Also, it is to be understood that the terms such as "comprise" and/or "comprising" are intended to indicate the existence of the components and are not intended to preclude the possibility that one or more components may exist or may be added.

Unless defined otherwise, all terms (including technical and scientific terms) used herein have the same meaning as is commonly understood by one of skill in the art to which this invention belongs.

Hereinafter, exemplary embodiments will be described in detail with reference to the accompanying drawings.

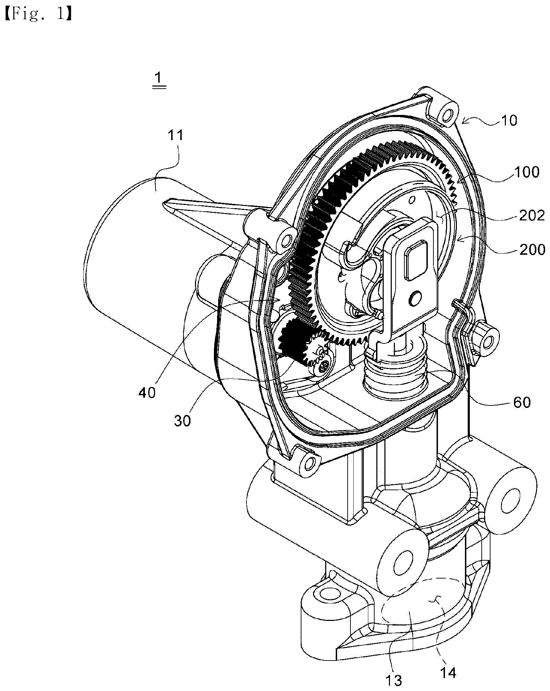

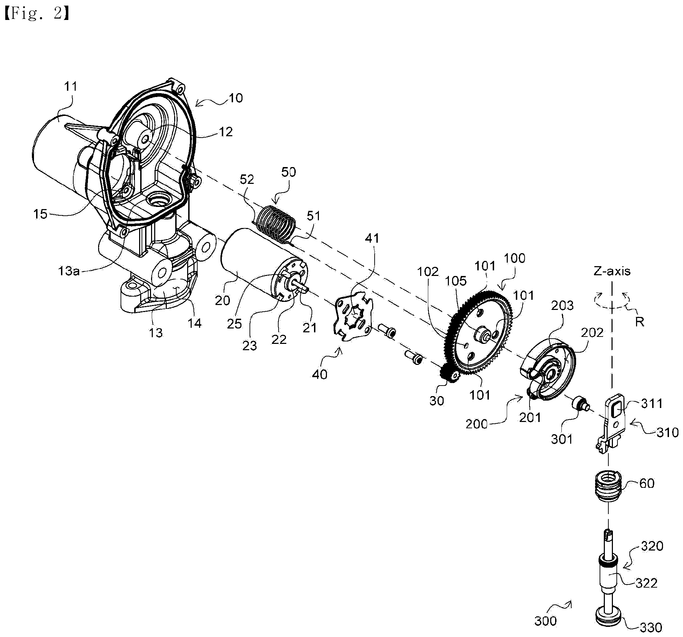

As shown in FIGS. 1 and 2, an exhaust gas recirculation (EGR) valve 1 for vehicles as disclosed may include a housing 10, a driving motor 20 accommodated in the housing 10, a pinion gear 30 disposed at a motor shaft 21 of the driving motor 20, a power train gear 100 engaged with the pinion gear 30, a cam unit 200 installed on the power train gear 100, and a valve unit 300 moving in an up and down direction in response to rotation of the cam unit 200.

A motor accommodation portion 11 may be provided behind the housing 10.

The driving motor 20 is accommodated in the motor accommodation portion 11.

A fixing plate 40 for fixing the driving motor 20 to the housing 10 may be provided in front of the driving motor 20.

A through hole 41 may be formed in a central portion of the fixing plate 40.

The motor shaft 21 of the driving motor 20 and a step difference of an endcap 22 around the motor shaft 21 may be disposed through the through hole 41 and the pinion gear 30 may be installed at the motor shaft 21.

The pinion gear 30 may be engaged with the power train gear 100 disposed next thereto.

The power train gear 100 may not be formed like teeth formed on a partial edge portion and but may be embodied as a full gear with teeth formed on an entire outer circumferential surface thereof.

The cam unit 200 may be installed on the power train gear 100.

The power train gear 100 and the cam unit 200 may be coupled via a predetermined coupling structure that will be described below rather than being integrally formed.

To this end, a plurality of inserting portions 101 shaped like a hole or a groove may be formed on a surface of the power train gear 100.

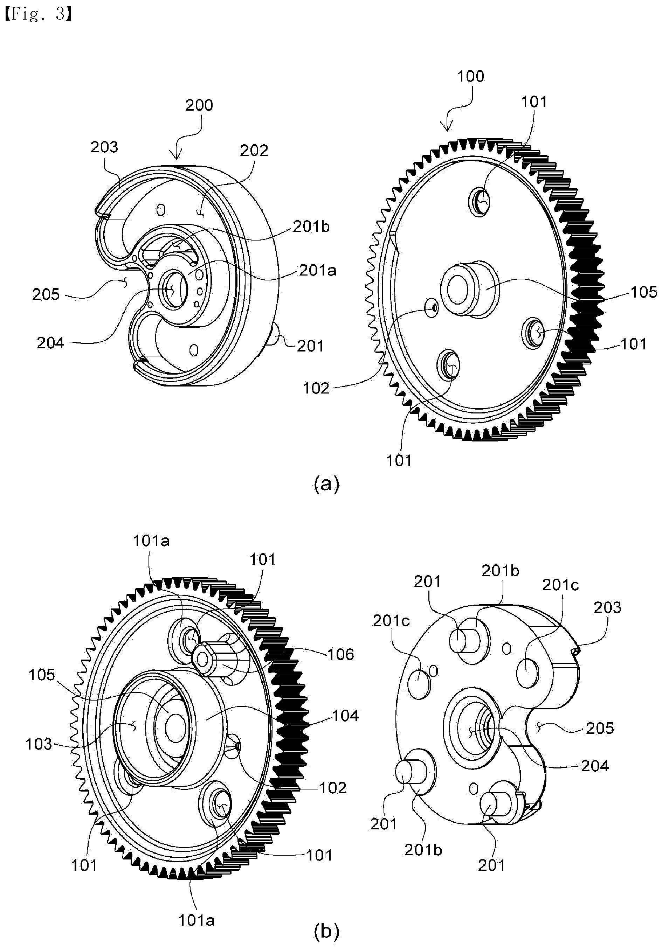

Protrusions 201 (refer to FIG. 3) inserted into the inserting portions 101 may be formed on a rear surface of the cam unit 200 so as to correspond to the inserting portions 101.

Although described below, the protrusions 201 may be inserted into the inserting portions 101 so as to be exposed out of a rear portion of the power train gear 100.

Separately from the inserting portions 101, a fixing hole 102 to which an end portion of a first elastic member 50 is fixed may be provided in the power train gear 100.

A rotation support 12 that is inserted into a rear central portion of the power train gear 100 so as to rotatably support the power train gear 100 may be provided to protrude in the housing 10.

An inserting space portion 103 (refer to FIG. 3) may be formed in the rear central portion of the power train gear 100 so as to allow the rotation support 12 to be inserted into the inserting space portion 103.

The inserting space portion 103 may be defined by a rib 104 shaped like a ring and formed in a central portion of the rib 104.

Accordingly, the rotation support 12 may be inserted into the inserting space portion 103 and, thus, the power train gear 100 may be rotatably supported in the housing 10.

The first elastic member 50 may be embodied as a spring having characteristics of both a coiled compressing spring and a torsion spring.

The first elastic member 50 may be disposed to surround the rotation support 12 and the rib 104 that defines the inserting space portion 103, one end portion 51 may be inserted into the power train gear 100, and the other end portion 52 may be inserted into an internal wall of the housing 10.

Accordingly, when the power train gear 100 rotates, the first elastic member 50 is twisted and, then, when force for rotation of the power train gear 100 is removed, the first elastic member 50 may restore the power train gear 100 to an original state.

The first elastic member 50 may be compressed and disposed between an internal wall of the housing 10 and a rear surface of the power train gear 100.

Accordingly, the first elastic member 50 may provide force that continuously presses the power train gear 100 forward by elastic compressive force.

Although described below, linear contact between the cam unit 200 connected to the power train gear 100 and an upper stem 310 of the valve unit 300 may be maintained by forward pressing force of the first elastic member 50 so as to prevent a valve unit from rotating (alias a rolling phenomenon) based on the Z axis (a vertical axis).

A protruding support 105 inserted into a central hole 204 of the cam unit 200 may be provided at a front central portion of the power train gear 100.

The protruding support 105 may be formed like a pipe that is hollow forward and backward and, alternatively, may be provided in the form of a filled protrusion, but not a pipe.

A cam groove 202 shaped like "C" may be formed in the cam unit 200.

An extension portion 203 may be formed on an edge of the cam groove 202 to embody a wall that extends forward.

A roller 301 that is an element of the valve unit 300 may be rotatably disposed in the cam unit 200.

The valve unit 300 may include the upper stem 310, the roller 301 connected to the upper stem 310, a magnet 311 installed on the upper stem 310, a lower stem 320 coupled to a lower portion of the upper stem 310, and a valve plate 330 installed on a lower portion of the lower stem 320.

A lower housing 13 through which EGR gas selectively flows and which functions as an up and down moving path of the valve unit 300 may be provided at a front lower portion of the housing 10.

The lower housing 13 may be hollow upward and downward.

A support groove 13a for supporting a second elastic member 60 may be formed with a step difference at an upper edge of the lower housing 13.

The second elastic member 60 may be provided between the support groove 13a and a lower surface of the upper stem 310 and, when a valve member 300 is lowered and then force for lowering the valve member 300 is removed, the second elastic member 60 may press the upper stem 310 upward to restore the valve member 300 to an original position.

The second elastic member 60 may be provided in the form of a coil spring, may be fixed to an upper portion of the lower stem 320, and may be disposed to be compressed between the upper stem 310 and the support groove 13a.

A bushing 322 shaped like a pipe may be provided in the lower stem 320 and disposed in the lower housing 13.

The lower stem 320 may move in up and down directions according to guidance of the bushing 322.

An inlet 14 to which EGR gas is introduced may be provided in a lower surface of the lower housing 13.

In response to up and down movement of the valve unit 300, the valve plate 330 may selectively open or close the inlet 14.

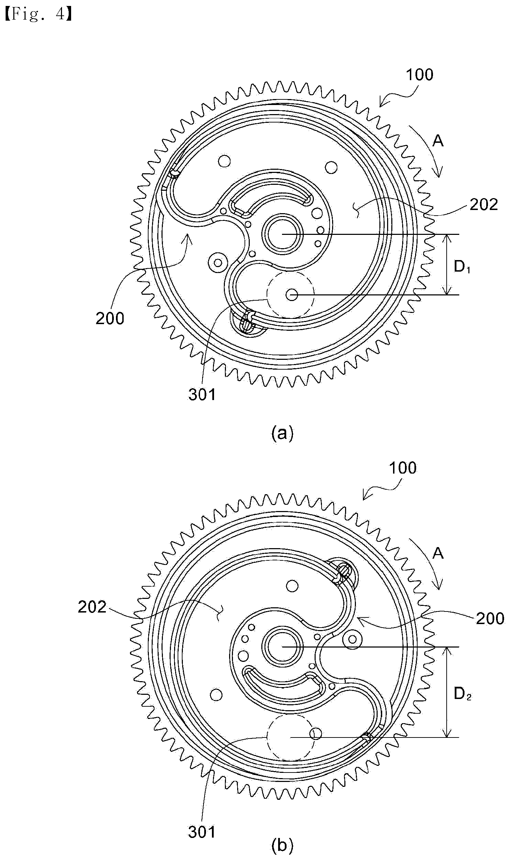

FIGS. 3 and 4 are diagrams showing the power train gear 100 and the cam unit 200 according to the present invention.

As shown in FIG. 3, the protruding support 105 may be formed at the front central portion of the power train gear 100.

The plurality of inserting portions 101 may be provided around the protruding support 105 and spaced apart from each other.

The fixing hole 102 into which the end portion 51 of the first elastic member 50 is inserted and fixed may be provided next to the protruding support 105.

The number of the inserting portions 101 may be three for stably arrangement of the cam unit 200 but may be changed depending on the cases.

The inserting space portion 103 into which the rotation support 12 provided in the housing 10 is inserted and the rib 104 shaped like a ring that defines the inserting space portion 103 may be formed on the rear surface of the power train gear 100.

The protruding support 105 may be formed with a slightly protruding rear portion at the center of the inserting space portion 103.

The protruding rear portion of the protruding support 105 may be shorter than the extension length of the rib 104.

A rear end portion of the protruding support 105 may surface-contact a front end portion of the rotation support 12 of the housing 10 so as to prevent the power train gear 100 from rotating in right and left directions and to stably support the power train gear 100.

The fixing hole 102 may be formed through the power train gear 100 forward and backward so as to be exposed out of the rear portion of the power train gear 100.

The inserting portions 101 may also be formed through the power train gear 100 forward and backward so as to be exposed out of the rear portion of the power train gear 100.

A stopper 106 extending backward may be formed to protrude on a portion of a rear surface of the power train gear 100.

The stopper 106 may be caught by a housing stopper (not shown) formed on an inner surface of the housing 10.

Thereby, excessive rotation of the power train gear 100 may be prevented.

Accommodation grooves 101a may each be formed at an edge around an inlet of the inserting portion 101 that is formed through the power train gear 100 so as to be exposed out of the rear surface of the power train gear 100.

When the protrusion 201 of the cam unit 200 is inserted into the inserting portion 101 so as to be exposed out of the rear portion of the power train gear 100 and a diameter of a rear end portion of the protrusion 201 is increased to form a flange 201a while pressing the rear end portion via hot stamping or press compression, an edge of the flange 201a may be accommodated in and caught by the accommodation groove 101a. The cam unit 200 may be entirely formed like "C". The cam unit 200 may include a recess 205 formed at one side thereof so as to entirely correspond to the cam groove 202 formed in the cam unit 200.

The cam groove 202 may be formed like "C" such that an interval between the cam groove 202 and a rotation center is increased from one end of the cam groove 202 toward the other end.

Accordingly, rotation movement of the cam unit 200 may be changed to up and down movement.

The central hole 204 into which the protruding support 105 formed on the front central portion of the power train gear 100 is inserted may be in the center of the cam unit 200.

A filled portion 201a may be provided around the central hole 204 and an unfilled structure 201b may be formed in a portion of the filled portion 201a, thereby enhancing intensity of a central portion by the unfilled structure 201b.

The extension portion 203 that extends forward may be formed on the edge of the cam groove 202.

The extension portion 203 may be formed along an outer edge of the cam groove 202.

The extension length of the extension portion 203 may be slightly greater than the protruding length of the filled portion 201a around the central hole 204.

Although described below, the extension portion 203 may be a structure that surface-contacts a rear surface of the upper stem 310.

Accordingly, rotation of the valve unit 300 in right and left directions may be prevented.

When the upper stem 310 is spaced apart from the cam unit 200, a free space corresponding to the spaced space may be formed and, accordingly, the valve unit 300 may entirely rotate in right and left directions based on a vertical axis (Z-axis) (R-direction rotation movement based on the Z-axis in FIG. 2).

However, the surface-contact structure may be provided and, accordingly, the valve unit 300 may perform only up and down movement.

The protrusion 201 inserted into the inserting portion 101 of the power train gear 100 may be formed on a rear surface of the cam unit 200.

The protrusions 201 may correspond to the positions and number of the inserting portions 101.

The protruding length of the protrusion 201 may be greater than the depth of the inserting portion 101 and, accordingly, a rear end portion of the protrusion 201 may be exposed out of the rear portion of the power train gear 100.

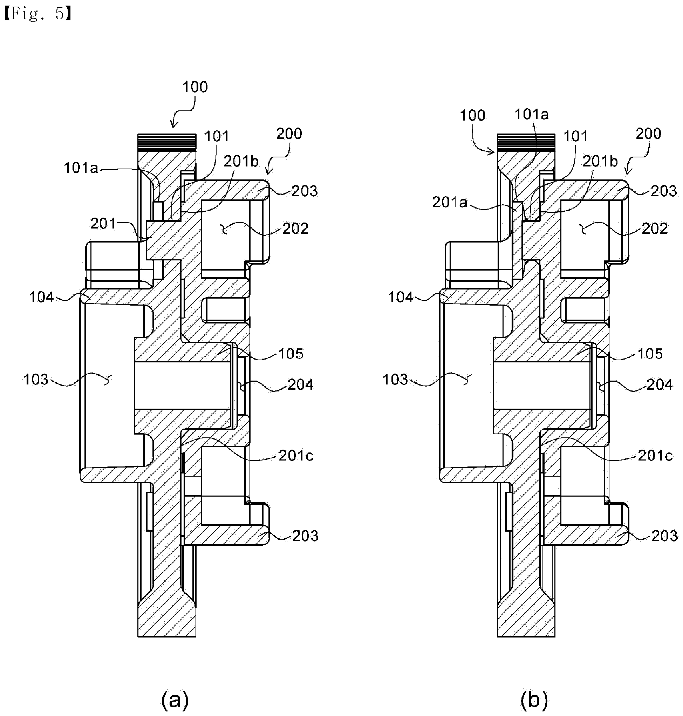

The rear end portion may be deformed to form the flange 201a (refer to FIG. 5) and the flange 201a may be accommodated in the accommodation grooves 101a of the inserting portions 101.

A spacer 201b formed with a step difference may be provided around the protrusion 201.

An auxiliary spacer 201c formed with a step difference may be formed on another region of the rear surface of the cam unit 200.

When the cam unit 200 and the power train gear 100 are coupled, the auxiliary spacer 201c and the spacer 201b may space the rear surface of the cam unit 200 and a front surface of the power train gear 100 apart from each other by a predetermined interval.

When flatness of the front surface of the power train gear 100 and flatness of the rear surface of the cam unit 200 are ideally the same, these spacers may be omitted but the flatness may be changed during manufacture.

In this case, the front surface of the power train gear 100 and the rear surface of the cam unit 200 may be locally unstuck upon being closely adhered, thereby causing structural instability of a coupling structure between the power train gear 100 and the cam unit 200.

Accordingly, in order to prevent mismatch of flatness, a direct contact portion between the front surface of the power train gear 100 and the rear surface of the cam unit 200 may be minimized and only the spacer 201b and the auxiliary spacer 201c may contact so as to overcome the issue in terms of the structural instability due to mismatch of flatness.

FIG. 4A illustrates the case in which rotation power is not supplied to the cam unit 200 and the power train gear 100 and FIG. 4B illustrates the case in which rotation power is supplied to the cam unit 200 and the power train gear 100.

In FIG. 4A, a distance between the center of the roller 301 of the valve unit 300 between the rotation center of the cam unit 200 is denoted by D₁.

This case may refer to a state in which the valve unit 300 moves upward and, in this case, the valve plate 330 may close the inlet 14

In this state, when the cam unit 200 rotates in a direction "A", arrangement of the cam groove 202 may be changed.

In this case, a distance between the roller 301 of the valve unit 300 and the rotation center of the cam unit 200 is denoted by D₂.

This case may refer to a state in which the valve unit 300 moves downward and, in this case, the valve plate 330 may open the inlet 14.

Comparing D₁ and D₂, D₂ may be greater than D₁ and, in this regard, this means that the valve unit 300 moves by this difference which refers to a degree of opening or closing the inlet 14 by the valve plate 330.

FIG. 5 is a set of lateral cross-sectional views showing the case in which the power train gear 100 and the cam unit 200 are coupled.

As shown in FIG. 5, the extension portion 203 of the cam unit 200 may further extend forward compared with other parts. This is for linear contact with the upper stem 310, as described above.

When the protrusion 201 formed on the rear surface of the cam unit 200 is inserted into the inserting portion 101 of the power train gear 100, rear end portion of the protrusion 201 may further protrude compared with a position of the edge of the inserting portion 101, as illustrated in FIG. 5A.

In this state, when hog pressing is performed on the rear end portion of the protrusions 201, a diameter of the rear end portion is increased to form the flange 201a while pressing the rear end portion and the flange 201a may be accommodated in the accommodation groove 101a formed on the rear surface of the power train gear 100.

By virtue of the coupling structure between the accommodation groove 101a and the flange 201a, a coupling state between the power train gear 100 and the cam unit 200 may be stably maintained.

In addition, due to the spacer 201b and the auxiliary spacer 201c, the rear surface of the cam unit 200 and the front surface of the power train gear 100 may be spaced apart except for regions in which the spacer 201b and the auxiliary spacer 201c are positioned.

The above spaced space may be formed to prepare for possibility of mismatch between flatness of the front surface of the power train gear 100 and flatness of the rear surface of the cam unit 200, as described above.

However, the protrusion 201 may not be exposed out of the inserting portion 101. Furthermore, when the inserting portion 101 is formed in the form of a groove rather than being formed through forward and backward, the protrusion 201 may be inserted into the groove that functions as the inserting portion 101.

When the protrusion 201 is not exposed outside, the aforementioned flange 201a may not be formed.

Instead, the power train gear 100 may be formed of light transmissive member and a laser beam is emitted to a lateral surface of the power train gear 100.

Then, thermal fusion may proceed while melting the spacer 201b and an internal surface of the inserting portion 101 and an external surface of the protrusion 201 may be connected to each other while a space between the inserting portion 101 and the protrusion 201 is filled with a material that flows while the spacer 201b is melted.

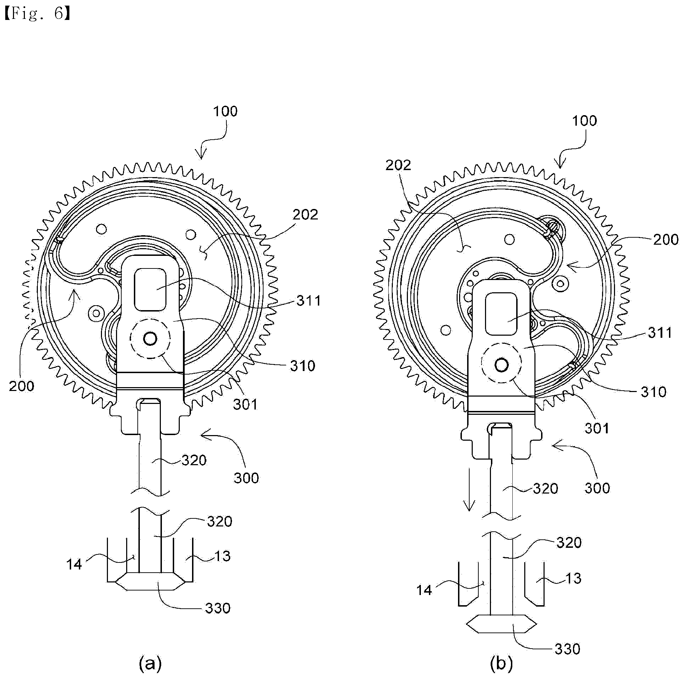

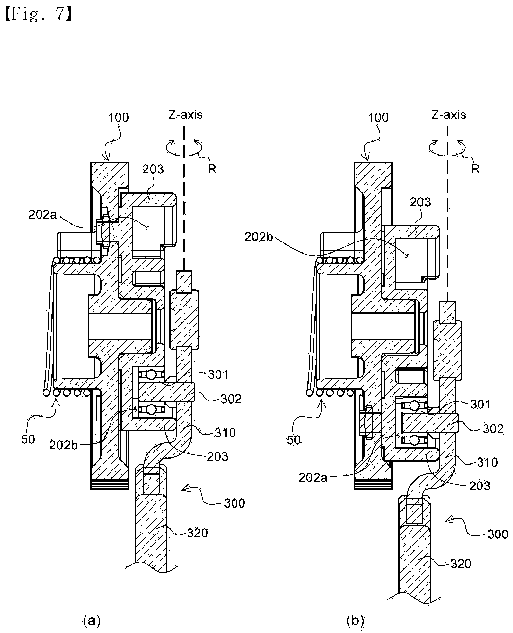

FIGS. 6 and 7 show the case in which the valve unit 300 is connected to the cam unit 200 and the valve unit 300 moves upward in response to rotation of the cam unit 200 and the power train gear 100.

As shown in FIG. 6A and 7A, before rotation power is not transmitted to the power train gear 100, a cam groove region 202a that is relatively far from the rotation center of the cam unit 200 may be positioned up and a cam groove region 202b that is relatively close to the rotation center may be positioned down.

The roller 301 connected to the upper stem 310 may do relative motion while contacting with the cam groove 202 and, in this regard, before power is transmitted to the roller 301, the roller 301 may be positioned in the cam groove region 202b that is relatively close to the rotation center of the cam unit 200.

Accordingly, the valve unit 300 may be positioned relatively up and, thus, the valve plate 330 may close the inlet 14.

As shown in FIGS. 6B and 7B, when rotation power is transmitted to the power train gear 100, the cam groove region 202b that is relatively close to the rotation center of the cam unit 200 may be positioned up and the cam groove region 202a that is relatively far from the rotation center may be positioned down.

The roller 301 connected to the upper stem 310 may do relative motion while contacting with the cam groove 202 and, in this regard, when power is transmitted to the roller 301, the roller 301 may be positioned in the cam groove region 202a that is relatively far from the rotation center of the cam unit 200.

Accordingly, compared with the state of FIG. 6A, the valve unit 300 may be positioned relatively down and, thus, the valve plate 330 may open the inlet 14.

As shown in FIGS. 6 and 7, a continuous contact state with the extension portion 203 of the cam groove 202 from one side of the rear surface of the upper stem 310 to the other side may be maintained.

The extension portion 203 may be continuously formed on an outer edge portion of the cam groove 202 along the cam groove 202.

Accordingly, even if a position of the roller301 is changed in response to rotation of the cam unit 200 and the valve unit 300 continuously moves upward, the continuous linear contact state between the upper stem 310 and the extension portion 203 may be maintained.

Due to the continuous contact state, rotation (R) based on the vertical axis (Z-axis) may be prevented.

The magnet 311 may be disposed on the upper stem 310 and a hall sensor (not shown) for measuring magnetic force may be disposed at a housing or a housing cover.

As the valve unit 300 moves up and down, a position of the magnet 311 may be changed.

The hall sensor may measure magnetic force of a magnet to recognize a position of a valve unit.

When the position of the magnet 311 is changed in response to change in the position of the valve unit 300, magnetic force of the magnet 311, measured by the hall sensor, may also be changed.

However, even if the magnet 311 is disposed at the same height, when the upper stem 310 rotates (R) based on the Z-axis that is a vertical axis, the detected magnetic force may be different from magnetic force that is measured by the hall sensor when the upper stem 310 does not rotate.

Accordingly, it may be difficult to accurately detect a position of the valve unit 300.

Accordingly, as disclosed, the extension portion 203 and the upper stem 310 may continuously contact each other and, thus, the valve unit 300 may move only in up and down directions along the vertical axis (Z-axis) without rotation based on the Z-axis that is the vertical axis.

The upper stem 310 and the lower stem 320 are coupled via welding rather than being integrally formed and, thus, when high-temperature heat generated during EGR gas flow is transmitted to the lower stem 320, the heat may be effectively blocked to the upper stem 310.

Accordingly, the magnet 311 may be prevented from being damaged by high-temperature heat.

In order to prevent heat from being transmitted to the magnet 311, a separate space (blanking) may be provided below the magnet.

The first elastic member 50 may be provided behind the power train gear 100 and the power train gear 100 may be pressed forward by support force the first elastic member 50, thereby continuously maintaining a contact state between the cam unit 200 and the upper stem 310.

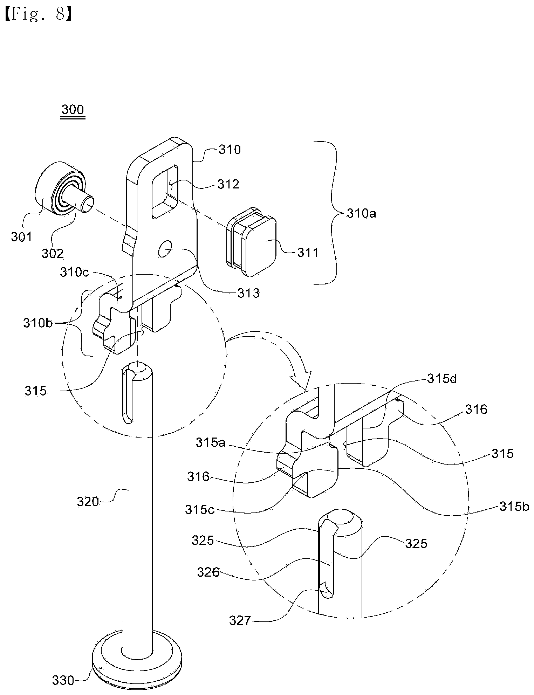

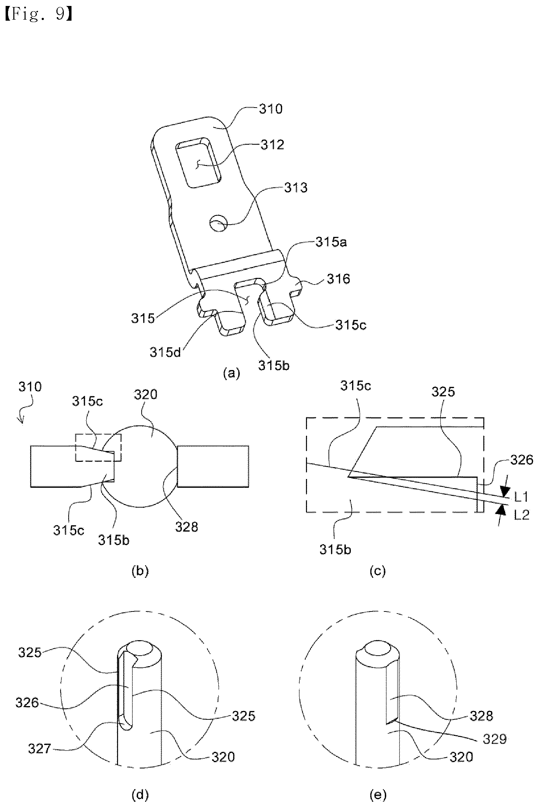

As shown in FIGS. 8 and 9, the upper stem 310 and the lower stem 320 may be coupled rather than being integrally formed.

A first coupling groove 315 may be provided on the upper stem 310, a second coupling groove 326 may be provided on the lower stem 320, and the first coupling groove 315 and the second coupling groove 326 may be coupled to each other to form a coupling structure.

The upper stem 310 may be divided into an upper region 310a and a lower region 310b. A bent portion 310c may be provided to connect the upper region 310a and the lower region 310b.

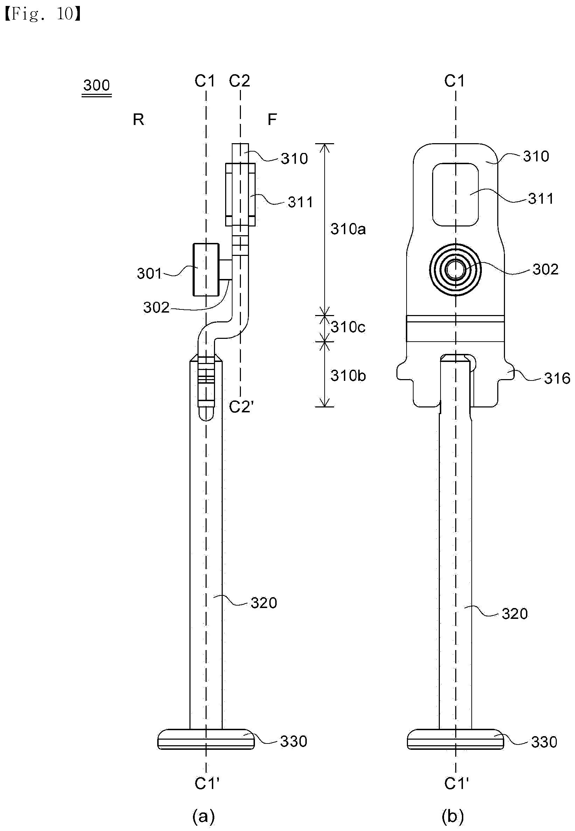

The bent portion 310c may be bent to one side such that a vertical center C2-C2' (refer to FIG. 10) of the upper region 310a and a vertical center C1-C1' (refer to FIG. 10) of the lower region 310b do not match each other and the lower region 310b protrudes compared with one side of the upper region 310a.

A through hole 312 may be formed in the upper region 310a of the upper stem 310 and the magnet 311 may be installed in the through hole 312.

When the valve unit 300 moves in up and down directions, the magnet 311 may also move in up and down directions, magnetic force detected by a hall sensor (not shown) for measuring magnetic force of the magnet 311 may be changed and, thus, change in position of the valve unit 300 may be measured in response to the change in magnetic force.

A shaft insertion hole 313 into which a roller shaft 302 is inserted may be formed below the through hole 312. The roller shaft 302 may be fixedly installed to the shaft insertion hole 313 and, thus, the roller 301 and the upper stem 310 may be connected.

The bent portion 310c may be bent in an inward direction (in a gear direction) from a lower end portion of the upper region 310a of the upper stem 310.

The lower region 310b of the upper stem 310 may extend downward from one end of the bent portion 310c.

Wing parts 316 for supporting an upper end portion of the second elastic member 60 (refer to FIG. 2) may be formed at opposite sides of the lower region 310b of the upper stem 310.

The first coupling groove 315 may be provided in the lower region 310b of the upper stem 310.

The first coupling groove 315 may be coupled and then fixed an upper portion of the lower stem 320 via welding.

A tolerance groove 315a may be formed at one side of an upper edge of the first coupling groove 315.

When the first coupling groove 315 and an upper portion of the lower stem 320 are welded, welding bead material may be inserted into the tolerance groove 315a or when surrounding parts of the first and second coupling grooves 315 and 326 thermally expand, the tolerance groove 315a may provide a kind of buffer space or heat transfer block space.

An extension portion 315b that extends inwards by a predetermined length from an edge of the first coupling groove 315 may be provided at one side of the first coupling groove 315.

The extension portion 315b may be a portion inserted into the second coupling groove 326 formed on an upper lateral surface of the lower stem 320.

The extension portion 315b may be formed in up and down directions and the second coupling groove 326 may also be formed in up and down directions.

When the upper stem 310 and the lower stem 320 are coupled to each other, the extension portion 315b may slide and may be inserted into the second coupling groove 326.

The aforementioned tolerance groove 315a may be formed above the extension portion 315b.

A lateral wall portion 315 d may be provided to face the extension portion 315b.

The extension portion 315b may partially extend inward in the first coupling groove 315 but the lateral wall portion 315d may be formed to be vertically flat in up and down directions rather than extending inward.

A flat surface 328 positioned at an opposite side to the second coupling groove 326 may be formed at the upper portion of the lower stem 320 and may be formed in the form of a curved surface of flat surface that is recessed by partially cutting an outer circumferential surface of the cylindrical lower stem 320 in a vertical direction.

The flat surface 328 formed as described above may fixedly contact the lateral wall portion 315d.

The second coupling groove 326 may be provided on the lower stem 320.

The second coupling groove 326 may be sunken downward by a predetermined length at an upper end portion of the lower stem 320.

Lateral wall portions 325 may be formed at opposite sides of the second coupling groove 326 and a step difference portion 327 may be formed at a lower end portion of the second coupling groove 326.

When the extension portion 315b is inserted into the second coupling groove 326, the lateral wall portions 325 and a lateral surface of the extension portion 315b may contact each other and a lower end portion of the extension portion 315b and the step difference portion 327 may contact each other.

Inclined surfaces 315c may be formed at opposite sides of the extension portion 315b.

The inclined surfaces 315c may be formed by applying a pressure via forging to form opposite sides of the extension portion 315b to be inclined but may be formed via cutting.

The inclined surfaces 315c may contact the lateral wall portions 325 and, in this case, the inclined surfaces 315c may be pressed-fit and coupled to the lateral wall portions 325 to prevent the inclined surfaces 315c from being externally separated.

That is, an extension line L1 of the inclined surface 315c and an extension line L2 extending in the same inclination direction as an inclined surface of an outermost end portion of the lateral wall portion 325 may not match.

Rather, L1 may be externally positioned and L2 may be internally positioned.

This means that the inclined surface 315c and the lateral wall portions 325 interfere with each other and that the inclined surface 315c pressed-fits tightly with respect to the lateral wall portion 325 during assembly of the upper stem 310 and the lower stem 320.

As described above, the flat surface 328 may be formed at an opposite side to f the second coupling groove 326 and a step difference portion 329 may be formed below the flat surface 328.

The flat surface 328 may surface-contact the lateral wall portion 315d of the upper stem 310 and a lower end portion of the lateral wall portion 315d may stuck by the step difference portion 329.

The flat surface 328 may be formed in the form of a flat surface or a concave curved surface by partially cutting an upper surface of the cylindrical lower stem 320.

When both the internal surface of the second coupling groove 326 and the flat surface 328 are formed as a flat surface of a concave curved s surface, the extension portion 315b or the lateral wall portion 315d of the upper stem 310 is inserted, the internal surface of the second coupling groove 326 may surface-contact the extension portion 315b and the lateral wall portion 315d may surface-contact the flat surface 328.

If the flat surface 328 and a portion of the second coupling groove 326 are formed in the form of a curved surface rather than being processed in the form of a flat surface, welding is performed while the internal surface of the first coupling groove 315 and this curved surface contact each other, a substantial contact area is narrow and, thus, welding coherence may be greatly degraded.

However, as disclosed, a surface-contact structure may be formed and welding may be performed on the surface-contact structure so as to enhance coherence between the upper stem 310 and the lower stem 320.

FIG. 10 is a set of a side view and a front view of the valve unit 300.

Viewed from a side of the valve unit 300, a center of the roller 301, a center of the lower region 310b of the upper stem 310, and a center of the lower stem 320 may be positioned in the same axis C1-C1'.

A start point of the valve unit 300, which initially receives force, may be the roller 301 and a last point of the valve unit 300, which receives the force and actually does an operation, may be the lower stem 320 and the valve plate 330 and, in this regard, the start point and the last point need to be disposed on the vertical axis in order to properly transfer the force.

A central axis C2-C2' of the upper region 310a of the upper stem 310 may be positioned outside the axis C1-C1'.

When the lower stem 320 is disposed on the axis C2-C2', the lower stem 320 may not match a position of the roller 301 and may be spaced apart from the roller by a length of the bent portion 310c to generate moment and, thus, rotation movement may proceed to cause power loss and to degrade accuracy of power transfer.

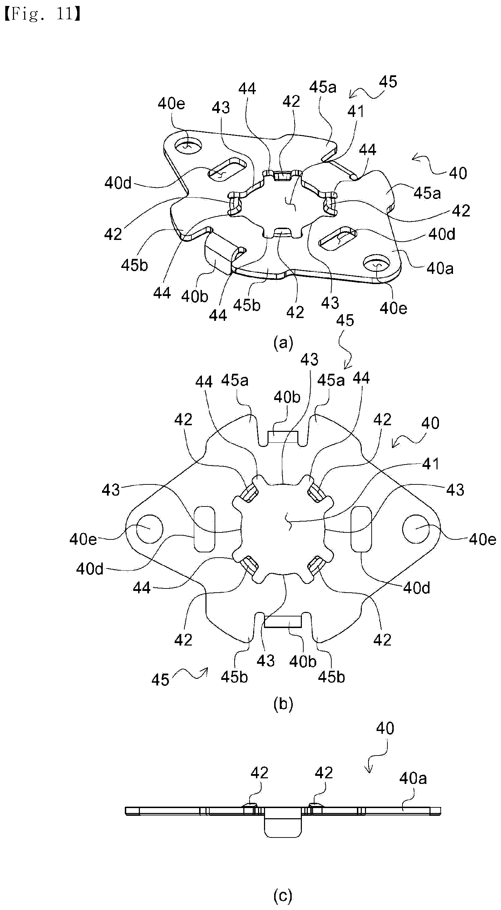

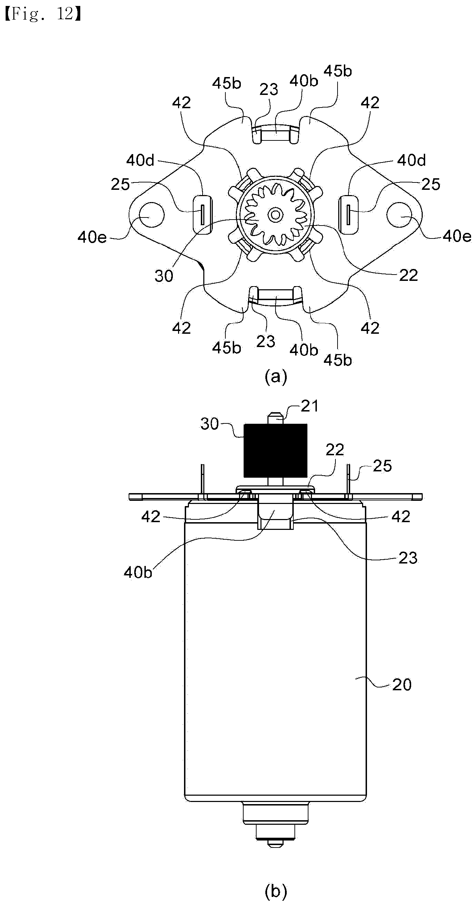

FIGS. 11 and 12 show the fixing plate 40 and a state in which the fixing plate 40 and the driving motor 20 are coupled. FIG. 12 shows a state in which the driving motor 20 and the fixing plate 40 are installed in the housing 10.

The driving motor 20 and the fixing plate 40 may be installed to be relatively close to a lower-left side, viewed from a front of the housing 10.

A fixing groove 15 may be formed in the housing 10 so as to install the fixing plate 40.

The fixing groove 15 may be disposed to be inclined on a front surface of the housing 10 and, accordingly, the fixing plate 40 may be inclined to correspond to the fixing groove 15.

As shown in FIG. 11, the through hole 41 through which a front central portion of the driving motor 20 is disposed may be formed in the fixing plate 40.

A support 42 that contacts a stepped central portion of the endcap 22 of the driving motor 20 and supports the driving motor 20 may be formed on an edge of the through hole 41.

The motor shaft 21 that functions as a rotation shaft may be formed to protrude in the center of the endcap 22 and the pinion gear 30 may be installed at an end portion of the motor shaft 21.

A plurality of supports 42 may be provided to be spaced apart around the through hole 41.

An auxiliary support 43 that is formed in parallel to a surface of the fixing plate 40 in a horizontal direction may be provided between the supports 42.

A fore-end portion of the support 42 may be bent in an insertion direction of the endcap 22 based on the surface of fore-end portion and may elastically support a lateral surface of the endcap 22.

That is, when the endcap 22 is inserted while the support 42 is bent, the support 42 may be slightly pressed during contact between the support 42 and a surface of the endcap 22 to elastically support the endcap 22.

Since the support 42 elastically supports the endcap 22, there is no spaced space between the endcap 22 and the support 42 and, thus, the endcap 22 and the support 42 may be closely adhered.

When a fine interval is generated between the endcap 22 and a structure for supporting the same, a position deviation of a motor shaft may be increased and, thus, a position deviation of a pinion gear installed in the motor shaft may also be increased.

In addition, there is a problem in that backlash is generated and frictional resistance between gears is increased due to increased mismatch errors between the pinion gear and the power train gear, thereby degrading operability and generating noise.

The issue may be basically overcome in terms of a fine interval (a fine interval between an endcap and a structure for supporting the same) which is the original reason of such series of problems so as to originally prevent the above problems that arise in a time sequence.

In addition, a structure may be provided in which the fixing plate 40 and the driving motor 20 are closely adhered and coupled to each other so as to enhance the assembly between the driving motor 20 and the fixing plate 40.

The support 42 and the auxiliary support 43 may be spaced apart rather than being directly connected and a groove portion 44 may be formed therebetween.

As such, by virtue of formation of the groove portion 44, the support 42 may elastically support the endcap 22 of the driving motor 20 without influence of other structures and, even if subtle vibration of the endcap 22 is transmitted to the support 42 due to an operation of the driving motor 20, the support 42 may autonomously absorb the vibration.

The fixing plate 40 may include a plate portion 40a in which the aforementioned through hole 41 is formed, bent portions 40b extending from opposite edges of the plate portion 40a and including an end portion bent downward, and extension portion 45 i.e., 45a and 45b provided around the bent portions 40b and horizontally extending from opposite edges of the plate portion 40a.

The bent portions 40b may be inserted into insertion grooves 23 at opposite edges of the driving motor 20 so as to maintain a coupling state between the fixing plate 40 and the driving motor 20.

The extension portion 45 may be divided into first and second extension portions 45a and 45b.

The first extension portion 45a may externally extend from one side of the plate portion 40a and the second extension portion 45b may externally extend from the other side of the plate portion 40a.

Two first extension portions 45a may be spaced apart and may include the bent portion 40b provided therebetween and two second extension portions 45b may also be spaced apart and may include the bent portion 40b provided therebetween.

Shapes and extension lengths of the first extension portion 45a and the second extension portion 45b may be asymmetrical with respect to the through hole 41.

The fixing groove 15 for installing the fixing plate 40 may be provided in the housing 10 and, in this regard, portions in which the first and second extension portions 45a and 45b are installed and the first and second extension portions 45a and 45b need to be asymmetrical in order to allow a an operator to immediately recognize the fact about an inverted structure even if the first and second extension portions 45a and 45b are inversely installed during installation. Accordingly, the asymmetrical structure is required.

Terminal through holes 40d through which a terminal portion 25 of the driving motor 20 is disposed may be provided in the plate portion 40a and fixing member installation holes 40e through which a fixing member such as a screw is disposed to fix the fixing plate 40 to a front surface of the housing 10 may be provided next to the terminal through holes 40d.

As disclosed, the power train gear 100 and the cam unit 200 may be assembled and fixed rather than being integrally formed and, thus, the cam unit 200 that is changed with various specifications may be selectively installed in the power train gear 100 with the same specification.

Accordingly, the cam unit 200 that is changed with various types may be installed according to a vehicle type as an installation target or customer requirements and, in this case, this change may be applied only to the cam unit 200 and there is no change in other structures and, accordingly, manufacturing cost may be remarkably reduced and rapid reaction may be possible in response to the structural change.

Although, conventionally, an internal structure is complicated in that a partial tooth gear is disposed to be connected to a pinion gear, a power train gear, and an output shaft and a separate cam is connected to the output shaft, according to the present invention, power is capable of being transferred only by the pinion gear 30 and the power train gear 100 and the cam unit 200 may be coupled directly to the power train gear 100 so as to further simplify an internal structure, contributing to products in a compact size and to reduction in manufacturing costs.

The upper stem 310 surface-contacts the cam unit 200 and, thus, the valve unit 300 may be prevented from rotating based on a vertical axis, thereby effectively opening and closing a valve and enhancing the accuracy of measurement of a degree of opening the valve.

When the fixing plate 40 of the motor is installed inside the housing 10, the fixing plate 40 may be asymmetrically formed so as to prevent confusion about right and left directions during arrangement, thereby enhancing assembly.

The support 42 for elastically supporting the endcap 22 of the motor may be provided in the fixing plate 40 and, thus, the issues generated when the driving motor 20 and the fixing plate 40 are spaced apart may be prevented.

That is, the issue in terms of position deviation of a motor shaft, the issue in terms of position deviation of a pinion gear, the issue in terms of backlash or frictional resistance between the pinion gear and the power train gear, the issue in terms of noise and operability reduction due to the backlash or frictional resistance, other issues may be prevented.

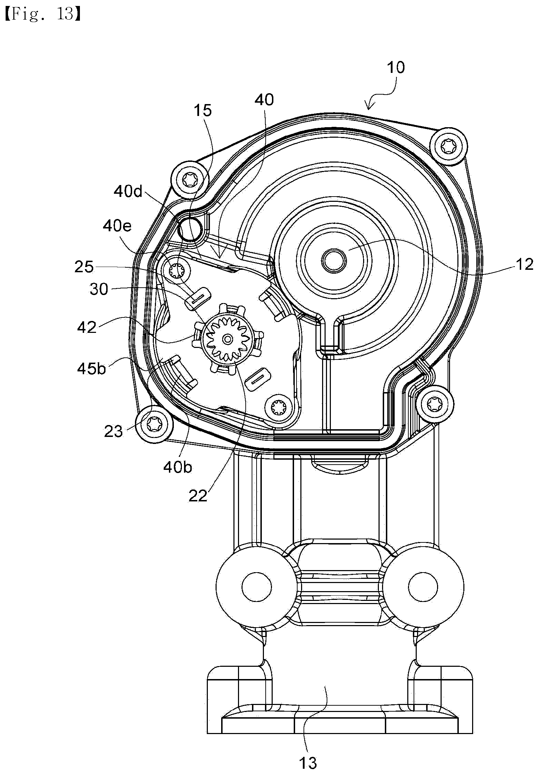

The drawings subsequent to FIG. 13 show modified embodiments of the embodiment of FIG. 1.

Hereinafter, repeated descriptions of elements already described above will not be given.

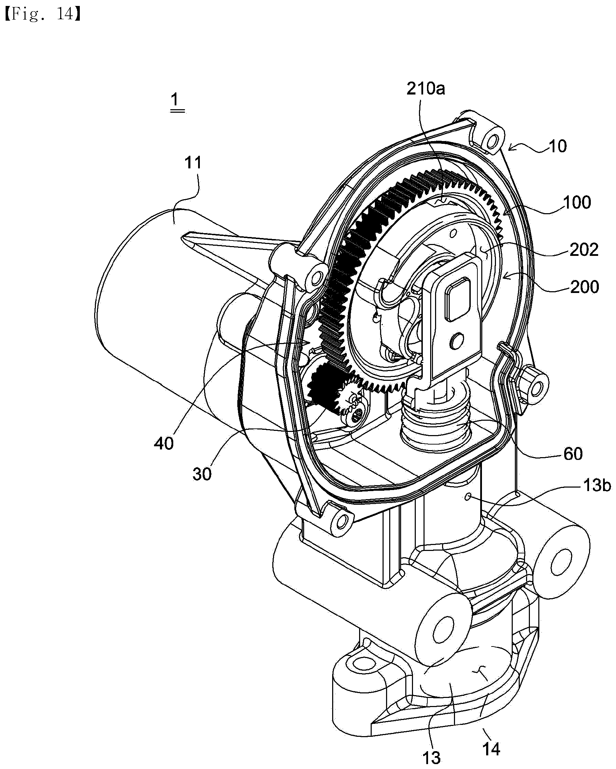

As shown in FIGS. 13 and 14, the bushing 322 shaped like a pipe may be provided in the lower stem 320 and disposed in the lower housing 13.

The lower stem 320 may move in up and down directions according to guidance of the bushing 322.

The inlet 14 to which EGR gas is introduced may be provided in a lower surface of the lower housing 13.

In response to up and down movement of the valve unit 300, the valve plate 330 may selectively open or close the inlet 14.

A first sealing member 350 may be provided on the bushing 322 and a second sealing member 360 may be provided on the first sealing member 350. A hole may be formed through both the first and second sealing members 350 and 360 and the lower stem 320 may be inserted into the hole and surround an outer circumferential surface of the lower stem 320.

The first sealing member 350 and the second sealing member 360 may prevent gas introduced to the inlet 14 of the lower housing 13 from moving toward the driving motor 20, the power train gear 100, and the cam unit 200.

Since the lower stem 320 needs to do relative up and down motion with respect to the bushing 322, a fine interval may be required between the lower stem 320 and the bushing 322 and exhaust gas may move upward through the interval and move toward the driving motor 20, the power train gear 100, and the cam unit 200.

When exhaust gas moves to the driving motor 20, the power train gear 100, or the cam unit 200, these elements may be contaminated and fine particles accumulate to impede an operation, thereby adversely affecting operation performance.

In order to overcome this problem, the first and second sealing members 350 and 360 may be installed and a gas exhaust channel 13b may be further provided in the lower housing 13.

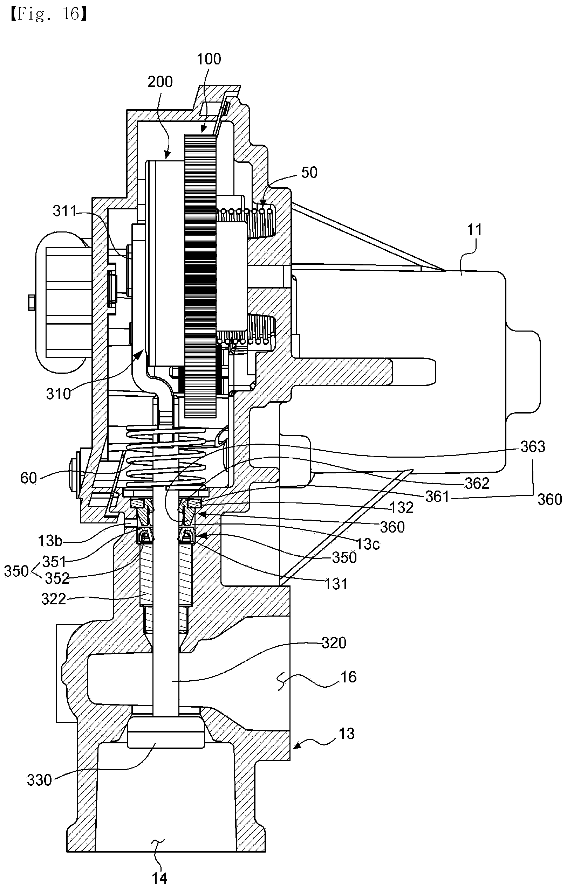

As shown in FIGS. 13 and 16, the gas exhaust channel 13b may be formed to be externally opened in the lower housing 13. The gas exhaust channel 13b may be connected to a moving path 13c of the lower stem 320.

The moving path 13c may be connected to the inlet 14 and an outlet 16 and the bushing 322 and the first and second sealing members 350 and 360 may be provided in the moving path 13c.

The gas exhaust channel 13b may be connected to the moving path 13c and may extend in an outer direction (a front direction in the drawing) of the lower housing 13 so as to be opened outward.

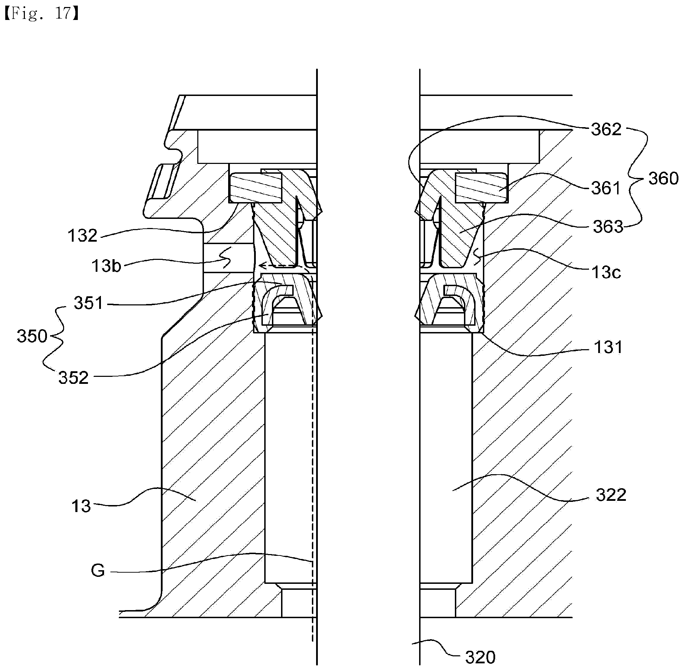

FIG. 17 is a detailed enlarged view of positions and structures of the first and second sealing members 350 and 360 and positions and structures of the gas exhaust channel 13b.

An arrangement height level of the gas exhaust channel 13b may be lower than the first sealing member 350 and the second sealing member 360. That is, the gas exhaust channel 13b may be connected to a portion of the moving path 13c, which is formed between the first sealing member 350 and the second sealing member 360.

Thereby, exhaust gas that is supposed to move upward through the first sealing member 350 may be discharged out of the lower housing 13 by the gas exhaust channel 13b.

A first accommodation portion 131 shaped like a step difference may be provided around the moving path 13c and the first sealing member 350 may be installed on the first accommodation portion 131.

The first sealing member 350 may be formed of an elastic material and may include a first body portion 351 shaped like a lip seal and a second body portion 352 positioned in the first body portion 351 and formed of a metallic material so as to maintain a shape of the first body portion 351.

An external portion of the first body portion 351 may contact an internal wall of the first accommodation portion 131 and seal the contact portion and an internal portion of the first body portion 351 may be inclined downward, contact a surface of the lower stem 320, and seal the contact portion.

The second body portion 352 may permit the external portion of the first body portion 351 to stably contact the first accommodation portion 131 and to seal the contact portion and may also maintain an overall shape of the first sealing member 350.

A second accommodation portion 132 on which the second sealing member 360 and the second sealing member 360 are accommodated may be provided above the gas exhaust channel 13b.

The second accommodation portion 132 may be provided with a step difference having an enlarged inner diameter compared with the moving path 13c.

The second sealing member 360 accommodated and installed on the second accommodation portion 132 may include a fixing portion 361 fixed to an internal surface of the second accommodation portion 132 to maintain a position of the second sealing member 360, and a contact portion 362 and an extension portion 363 that are connected or coupled to the fixing portion 361 or extends.

The contact portion 362 may contact an outer circumferential surface of the lower stem 320 and seal the contact portion so as to prevent exhaust gas from moving above the second sealing member 360 any longer.

The extension portion 363 may prevent the first sealing member 350 from moving upward when the lower stem 320 moves upward and the first sealing member 350 correspondingly moves upward.

A lower end portion of the extension portion 363 of the second sealing member 360 may be spaced apart from a surface of an upper end portion of the first sealing member 350.

An internal surface of the extension portion 363 may be spaced apart from an outer circumferential surface of the lower stem 320 and, thus, may not affect up and down movement of the lower stem 320, and an outer diameter of the extension portion 363 may be formed to have a tapered shape that becomes narrower from a upper portion toward a lower portion.

In particular, a portion corresponding to the gas exhaust channel 13b and the extension portion 363 need to be spaced apart from each other in order to prevent the gas exhaust channel 13b from being hidden by the extension portion 363 and to smoothly discharge gas to the outside.

However, an upper region of the extension portion 363 may be closely adhered to and may fix an internal surface of the moving path 13c.

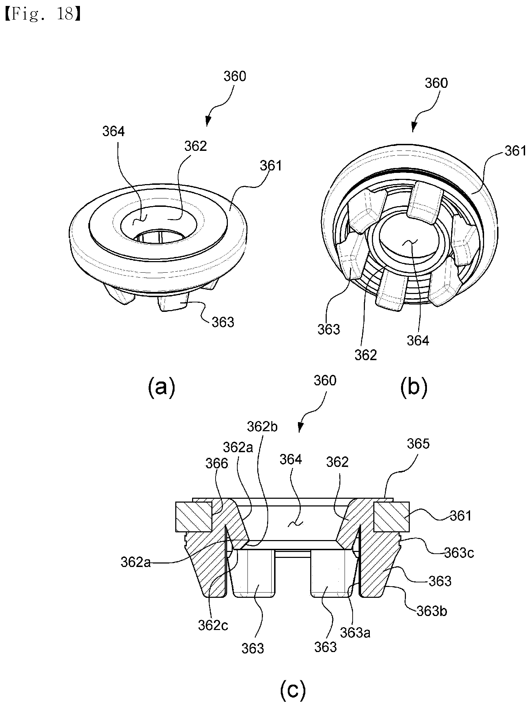

As shown in FIG. 18A to 18C, the fixing portion 361 of the second sealing member 360 may be formed of a material having the same intensity as metal and shaped like a ring.

The contact portion 362 and the extension portion 363 may be formed of an elastic material and may function as oil-seal that blocks oil.

The contact portion 362 and the extension portion 363 may be integrally formed. Alternatively, the contact portion 362 and the extension portion 363 may be coupled or may be coupled or connected to the fixing portion 361 via insert projection, or the fixing portion 361, the contact portion 362, and the extension portion 363 may be integrally formed.

The contact portion 362 may be inclined downward from an upper surface of the second sealing member 360 in a direction toward a through hole 364 formed in an internal center of the second sealing member 360 and an inner diameter of the contact portion 362 may be reduced downward.

That is, the contact portion 362 may be tapered downward.

The inner diameter of the contact portion 362 may be smaller than the outer diameter of the lower stem 320. In this case, when the lower stem 320 is inserted into the through hole 364, the contact portion 362 may be closely adhered to a surface of the lower stem 320 while being externally pressed so as to perform a sealing function.

The contact portion 362 may include a first inclination portion 362a that is inclined downward and has an inner diameter tapered downward, a second inclination portion 362b that is connected to the first inclination portion 362a and has an inner diameter extending downward, and a flat portion 362c that is connected to the second inclination portion 362b and formed in a flat state.

A boundary portion 362d may be formed between the first inclination portion 362a and the second inclination portion 362b, may be formed like a mountain to protrude toward the through hole 364, and may be continuously formed to be rounded along an inner circumference surface of the contact portion 362.

The boundary portion 362d may be a region that is substantially and most strongly adhered to the lower stem 320 and the first inclination portion 362a and the second inclination portion 362b may be inclined in opposite directions for smooth insertion during insertion of the lower stem 320.

The extension portion 363 may be disposed in an outer portion from the center of the through hole 364 compared with the contact portion 362 and a lower end portion of the extension portion 363 may be disposed below compared with the contact portion 362.

A plurality of extension portions 363 may be spaced apart and, in this regard, exhaust gas may flow through the spaced space and may be discharged through the gas exhaust channel 13b.

An internal wall surface 363a of the extension portion 363 may be disposed in an outer portion compared with an internal wall surface of the contact portion 362 and spaced apart from the lower stem 320.

An external wall surface 363b of the extension portion 363 may be tapered and, that is, an outer diameter of the external wall surface 363b may be reduced downward and, thus, the external wall surface 363b may be spaced apart from an internal wall of the moving path 13c to allow exhaust gas to flow.

A fixing region 363c may be provided at an upper portion of the external wall surface 363b and may partially protrude outward. The fixing region 363c may be closely adhered to an internal wall surface of the moving path 13c and may perform a sealing function of the adhered portion.

In particular, the adhesion may be enhanced as the protruding portion is deformed.

An outer diameter of the fixing portion 361 may be greater than an outer diameter of the extension portion 363 and, thus, the fixing portion 361 may be stably disposed and fixed to an internal lateral surface and a bottom surface of the second accommodation portion 132.

As described above, when the fixing portion 361 is shaped like a ring and is formed of a different material from the contact portion 362 and the extension portion 363, these may be coupled using an insert-projection method or other methods.

In this case, an installation groove 366 may be formed, the fixing portion 361 may be installed on an outer circumferential surface of the installation groove 366, and an upper surface portion 365 may be provided above the installation groove 366 and positioned in an upper level than an upper surface of the fixing portion 361.

The upper surface portion 365 may partially cover an upper portion of the fixing portion 361 so as to prevent the fixing portion 361 from being separated.

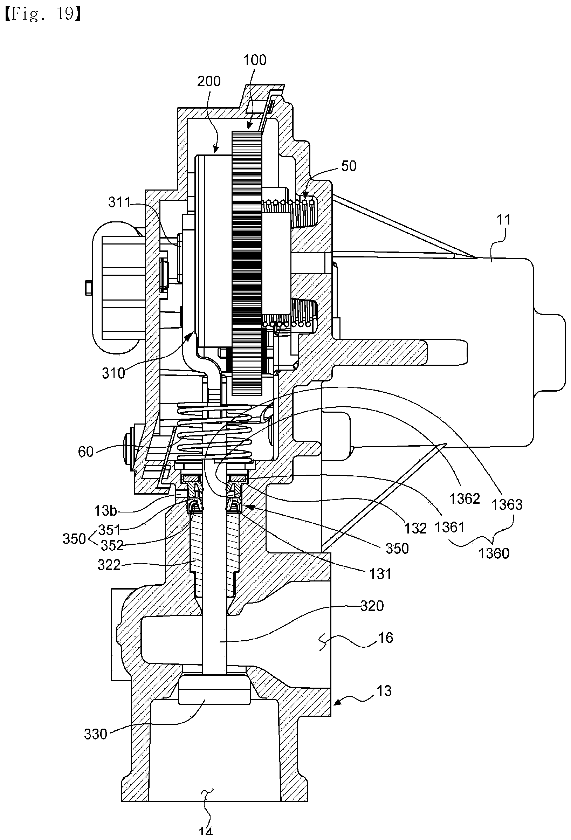

FIGS. 19 to 21 show a sealing member according to another embodiment of the present invention.

Hereinafter, repeated descriptions of elements already described above will not be given.

A second sealing member 1360 according to a second embodiment may also be disposed above the first sealing member 350 and may be accommodated on the second accommodation portion 132.

The gas exhaust channel 13b may be disposed between the first sealing member 350 and the second sealing member 1360.

Thereby, exhaust gas that is supposed to move upward through the first sealing member 350 may be discharged out of the lower housing 13 by the gas exhaust channel 13b.

The second sealing member 1360 according to the second embodiment and the second accommodation portion 132 on which the second sealing member 1360 is accommodated may be provided above the gas exhaust channel 13b.

The second accommodation portion 132 may be provided with a step difference having an enlarged inner diameter compared with the moving path 13c.

The second sealing member 1360 accommodated and installed on the second accommodation portion 132 may include the fixing portion 361 fixed to an internal surface of the second accommodation portion 132 to maintain a position of the second sealing member 360, portions 1363c and 1365 (which will be described below) for surrounding the fixing portion 361, and a contact portion 1362 and an extension portion 1363 that are connected or coupled to the fixing portion 361 or extends.

The contact portion 1362 may contact an outer circumferential surface of the lower stem 320 and seal the contact portion so as to prevent exhaust gas from moving above the second sealing member 1360 any longer.

The extension portion 1363 may prevent the first sealing member 350 from moving upward when the lower stem 320 moves upward and the first sealing member 350 correspondingly moves upward.

A lower end portion of the extension portion 1363 of the second sealing member 1360 may be spaced apart from a surface of an upper end portion of the first sealing member 350.

An internal surface of the extension portion 1363 may be spaced apart from an outer circumferential surface of the lower stem 320 and, thus, may not affect up and down movement of the lower stem 320, and an outer diameter of the extension portion 1363 may be formed to have a tapered shape that becomes narrower from a upper portion toward a lower portion.

In particular, a portion corresponding to the gas exhaust channel 13b and the extension portion 1363 need to be spaced apart from each other in order to prevent the gas exhaust channel 13b from being hidden by the extension portion 1363 and to smoothly discharge gas to the outside.

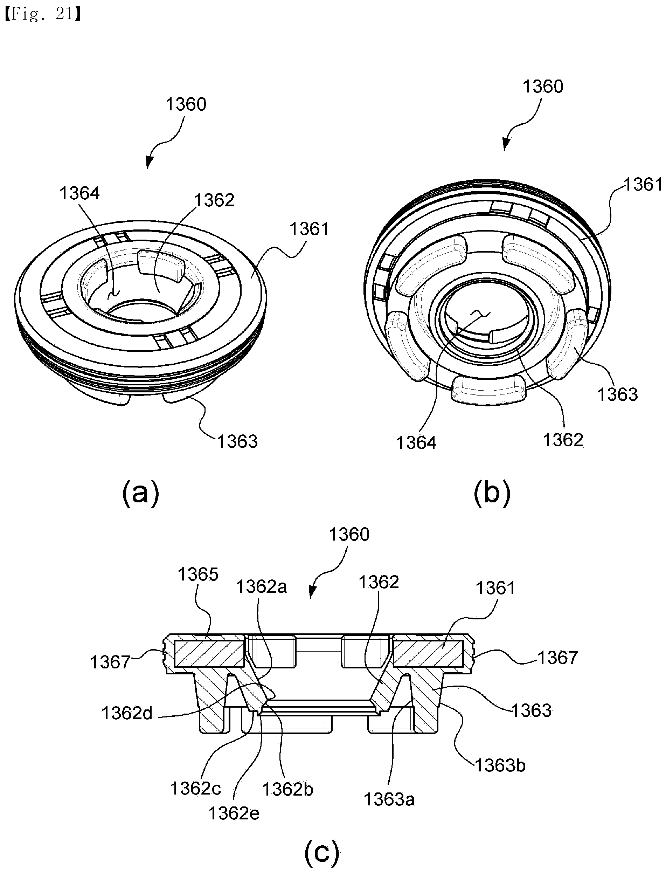

As shown in FIGS. 21A to 21C, a fixing portion 1361 of the second sealing member 1360 according to the second embodiment may be formed of a material having the same intensity as metal and shaped like a ring.

The contact portion 1362 and the extension portion 1363 may be formed of an elastic material and may function as oil-seal formed by coating oil on a surface.

The first and second embodiments are different in terms of whether a fixing portion is externally exposed or not.

That is, according to the first embodiment, a lateral surface of the fixing portion 361 is exposed out of an outermost portion of the second sealing member 360 but, according to the second embodiment, the fixing portion 1361 is surrounded by the contact portion 1362, the extension portion 1363, an upper surface portion 1365, and a lateral wall portion 1367.

The contact portion 1362, the extension portion 1363, the upper surface portion 1365, and the lateral wall portion 1367 may be integrally formed.

Alternatively, the contact portion 1362, the extension portion 1363, the upper surface portion 1365, and the lateral wall portion 1367 may be coupled or may be coupled or connected to the fixing portion 1361 via insert projection, or the fixing portion 361, the contact portion 1362, the extension portion 1363, the upper surface portion 1365, and the lateral wall portion 1367 may be integrally formed.

The contact portion 1362 may be inclined downward from an upper surface of the second sealing member 1360 in a direction toward a through hole 1364 formed in an internal center of the second sealing member 1360 and an inner diameter of the contact portion 1362 may be reduced downward.

That is, the contact portion 1362 may be tapered downward.

The inner diameter of the contact portion 1362 may be smaller than the outer diameter of the lower stem 320. In this case, when the lower stem 320 is inserted into the through hole 1364, the contact portion 1362 may be closely adhered to a surface of the lower stem 320 while being externally pressed so as to perform a sealing function.

The contact portion 1362 may include a first inclination portion 1362a that is inclined downward and has an inner diameter tapered downward, a second inclination portion 1362b that is connected to the first inclination portion 1362a and has an inner diameter extending downward, and a flat portion 1362c that is connected to the second inclination portion 1362b and formed in a flat state.

A boundary portion 1362d may be formed between the first inclination portion 1362a and the second inclination portion 1362b, may be formed like a mountain to protrude toward the through hole 1364, and may be continuously formed to be rounded along an inner circumference surface of the contact portion 1362.

The boundary portion 1362d may be a region that is substantially and most strongly adhered to the lower stem 320 and the first inclination portion 1362a and the second inclination portion 1362b may be inclined in opposite directions for smooth insertion during insertion of the lower stem 320.

A protrusion portion 1362d protruding downward may be provided between the second inclination portion 1362b and the flat portion 1362c. The protrusion portion 1362d may reinforce intensity of a lower end portion of the contact portion 1362.

The extension portion 1363 may be disposed in an outer portion from the center of the through hole 1364 compared with the contact portion 1362 and a lower end portion of the extension portion 1363 may be disposed below compared with the contact portion 1362.

A plurality of extension portions 1363 may be spaced apart and, in this regard, exhaust may flow through the spaced space and may be discharged through the gas exhaust channel 13b.

An internal wall 1363a of the extension portion 1363 may be disposed in an outer portion compared with an internal wall surface of a contact portion 1363 and spaced apart from the lower stem 320.

An external wall surface 1363b of the extension portion 1363 may be tapered and, that is, an outer diameter of the external wall surface 1363b may be reduced downward and, thus, the external wall surface 1363b may be spaced apart from an internal wall of the moving path 13c to allow exhaust gas to flow.

The lateral wall portion 1367 that forms a fixing region may be formed outside the fixing portion 1361 and may be connected to the extension portion 1363 and the upper surface portion 1365.

The lateral wall portion 1367 may partially protrude outward. The lateral wall portion 1367 may be closely adhered to an internal wall surface of the moving path 13c and may perform a sealing function of the adhered portion.

In particular, the adhesion may be enhanced as the protruding portion is deformed.

As described above, when the fixing portion 1361 is shaped like a ring and is formed of a different material from the contact portion 1362, the extension portion 1363, the lateral wall portion 1367, and the upper surface portion 1365, these may be coupled using an insert-projection method or other methods.

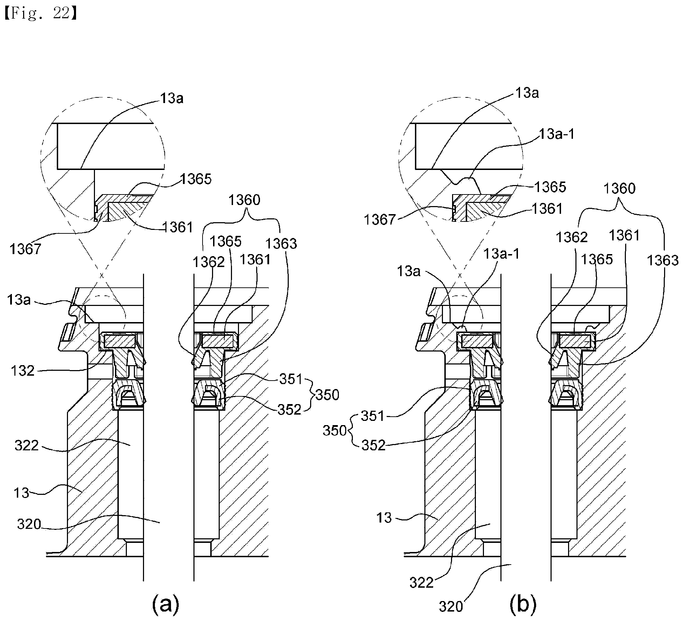

FIG. 22 is a modified embodiment of the first or second embodiment of a sealing member.

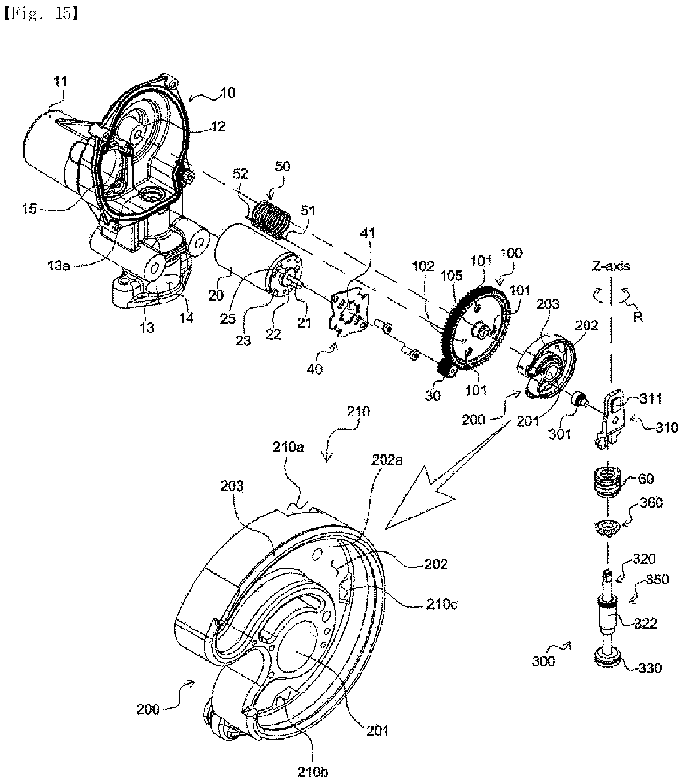

The support groove 13a on which the second elastic member 60 (refer to FIG. 15) is accommodated may be formed with a step difference above the second accommodation portion 132 provided in the lower housing 13.

In FIG. 22, the support groove 13a may be partially deformed to cover a portion of an upper surface of the second sealing member 1360 (which also includes the second sealing member 360 according to the first embodiment) so as to further prevent the second sealing member 1360 from being separate.

That is, as shown in FIG. 22A, when the second sealing member 1360 is accommodated on the second accommodation portion 132, a height level of a bottom surface of the support groove 13a may be slightly higher than the upper surface portion 1365 of the second sealing member 1360.

In this state, the bottom surface of the support groove 13a may be deformed by pointing using a pointed instrument to form a deformed portion 13a-1 and the upper surface portion 1365 of the second sealing member 1360 may be covered as the deformed portion 13a-1 moves inward, as shown in FIG. 22B. (b).

As such, the deformed portion 13a-1 may function as a type of flange so as to prevent the second sealing member 1360 from being separate or moving upward, thereby maintaining a more stable position.

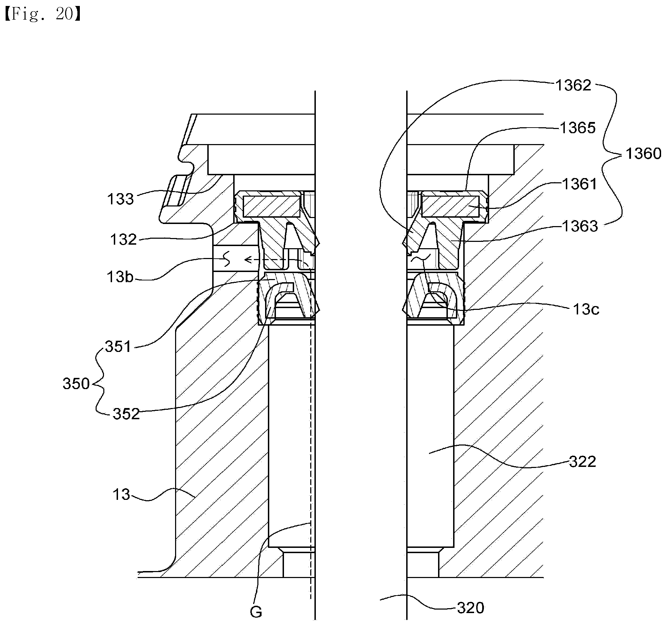

As shown in FIG. 17 or 20, exhaust gas G may move upward through a fine interval between the bushing 322 and the lower stem 320. In this case, the first sealing member 350 may primarily prevent the exhaust gas G from moving upward.

However, when a sealing state is released due to damage, aging, or upward movement of the first sealing member 350, the exhaust gas G may move above the first sealing member 350.

Since the second sealing members 1360 and 360 are closely adhered to the moving path 13c and the lower stem 320 to clog a gap therebetween, the exhaust gas G moving above the first sealing member 350 may be prevented from moving upward any longer and, thus, may not move toward the driving motor 20, the power train gear 100, or the cam unit 200.

In addition, the gas exhaust channel 13b is externally opened and, thus, the exhaust gas G flowing through the first sealing member 350 may be externally discharged through the gas exhaust channel 13b. Accordingly, contamination or malfunction of the driving motor 20, the power train gear 100, or the cam unit 200 due to the exhaust gas G may be prevented.

Hereinafter, a structure in which an impurity outlet 210 is formed in the cam unit 200 will be described.

Hereinafter, repeated descriptions of elements already described above will not be given.

As shown in FIG. 15, the impurity outlet 210 (210a, 210b, and 210c) may be formed in an inner space of the cam groove 202. The impurity outlet 210 (210a, 210b, and 210c) may connect the inner space of the cam groove 202 and an external space of the extension portion 203 shaped like a wall that surround an outer edge of the cam groove 202.

The impurity outlet 210 (210a, 210b, and 210c) may rapidly discharge impurities such as small particles or powders, which are generated when a portion of an internal surface of the cam groove 202 is worn out due to contact, friction, and so on during movement of a roller in the cam groove 202, out of the cam groove 202.

To this end, a plurality of impurity outlets 210 (210a, 210b, and 210c may be spaced apart from each other. That is, the plurality of impurity outlets 210 may be arranged in an upper region, a lower region, and an intermediate region between the upper region and the lower region of the cam groove 202.

For convenience, an impurity outlet disposed in the upper region of the cam groove 202 is referred to as a first impurity outlet 210a, an impurity outlet disposed in the lower region is referred to as a second impurity outlet 210b, and an impurity outlet disposed in the intermediate region between the upper region and the lower region is referred to as a third impurity outlet 210c.

The impurity outlet 210 (210a, 210b, and 210c) may be opened by removing or cutting a portion of an outer edge of the extension portion 203 and the cut portion may be connected to an internal space of the cam groove 202.

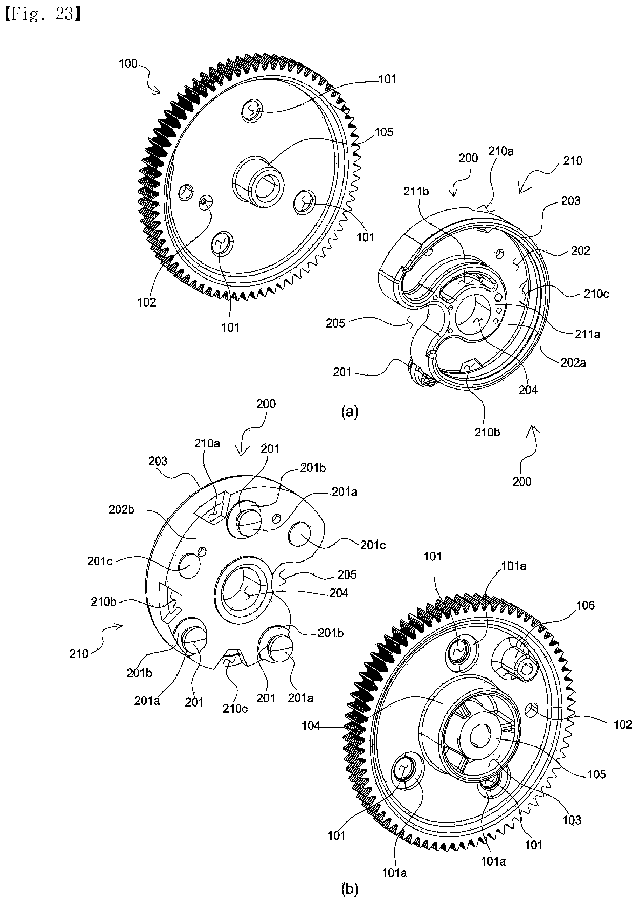

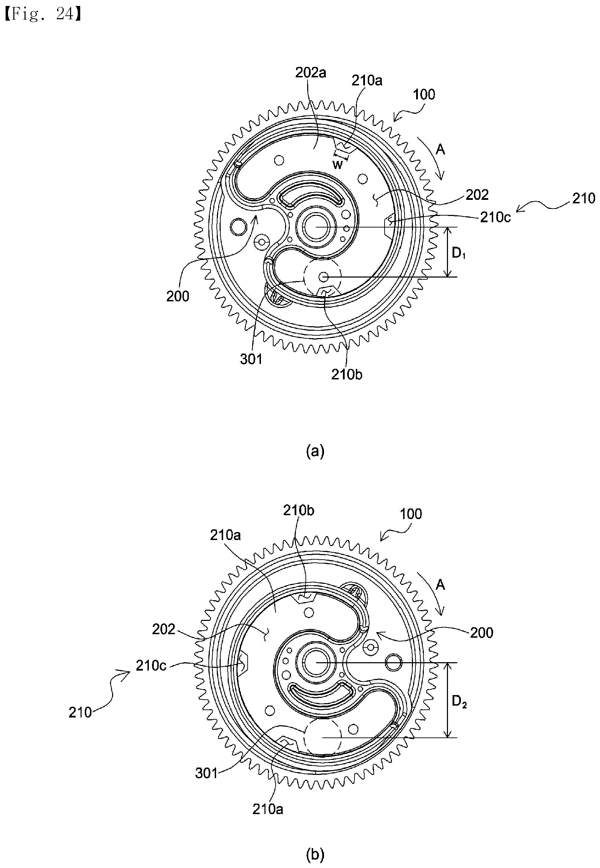

FIGS. 23 and 24 show the power train gear 100 and the cam unit 200 according to the present invention.

As shown in FIGS. 23A and 23B, the first impurity outlet 210a may connect an upper space of an internal space of the cam groove 202 and an external space of an outer edge of the cam unit 200.

The second impurity outlet 210b may connect a lower space of the internal space of the cam groove 202 and the external space of the outer edge of the cam unit 200.

The third impurity outlet 210c may connect an intermediate space of the internal space of the cam groove 202 and the external space of the outer edge of the cam unit 200.

As described above, the impurity outlet 210 (210a, 210b, and 210c) may be formed by cutting or removing a portion of a bottom portion 202a of the cam unit 200 and the extension portion 203 and a portion of a rear surface portion 202b of the cam unit 200.

Accordingly, one of the impurity outlets 210 (210a, 210b, and 210c) may be formed by connecting a potion formed by cutting or removing a portion of the extension portion 203 and a portion of the rear surface portion 202b and the bottom portion 202a of the cam unit 200.

Accordingly, the thickness of an edge of the impurity outlet 210 (210a, 210b, and 210c) may correspond to the thickness of the extension portion 203 and the thickness of the bottom portion 202a.

An external portion of the impurity outlet 210 (210a, 210b, and 210c) may be formed by cutting or removing a portion of the extension portion 203 and an internal portion of the impurity outlet 210 (210a, 210b, and 210c) may be formed by cutting or removing a portion of the rear surface portion 202b and the bottom portion 202a.

The impurity outlet 210 (210a, 210b, and 210c) may be positioned adjacent to the protrusions 201 formed behind the cam unit 200 and may be formed in an outermost portion in a radial direction of the cam groove 202.

As such, when impurities accumulate on the extension portion 203 due to the above arrangement of the impurity outlet 210 (210a, 210b, and 210c, the cam unit 200 may rotate and, when the impurity outlet 210 (210a, 210b, and 210c) is positioned in a lowermost end of the cam unit 200 during rotation of the cam unit 200, impurities may be discharged through the impurity outlet 210 (210a, 210b, and 210c) by gravity.

FIG. 24A shows a state in which rotation power is not supplied to the cam unit 200 and the power train gear 100. FIG. 24B shows a state in which rotation power is supplied to the cam unit 200 and the power train gear 100 and the cam unit 200 and the power train gear 100 rotate.

As shown in FIG. 24A, when an EGR valve does not open an exhaust channel, that is, when the cam unit 200 does not rotate, the first impurity outlet 210a may be positioned in the upper region of the cam groove 202, the second impurity outlet 210b may be positioned in the lower region of the cam groove 202, and the third impurity outlet 210c may be positioned in the intermediate region of the cam groove 202.

In this case, when impurities accumulate, the impurities may be discharged through the second impurity outlet 210b.

As shown in FIG. 24B, when the EGR valve completely opens the exhaust channel, the cam unit 200 rotates to a maximum degree. In this state, the second impurity outlet 210b may be positioned in the upper region of the cam groove 202, the first impurity outlet 210a may be positioned in the lower region of the cam groove 202, and the third impurity outlet 210c may be positioned in the intermediate region of the cam groove 202.

In this case, when impurities accumulate, the impurities may be discharged through the first impurity outlet 210a.

Although not shown, in an intermediate procedure between a procedure of FIG. 24A and FIG. 24B, the third impurity outlet 210c is positioned in the lower region of the cam groove 202 and, thus, impurities may be discharged through the third impurity outlet 210c.

Here, the impurity outlet 210 (210a, 210b, and 210c) may be formed like a trapezoid with a width W of the impurity outlet 210 (210a, 210b, and 210c), which is externally increased from an internal portion. The impurity outlet 210 (210a, 210b, and 210c) may externally extend so as to more smoothly discharge impurities.

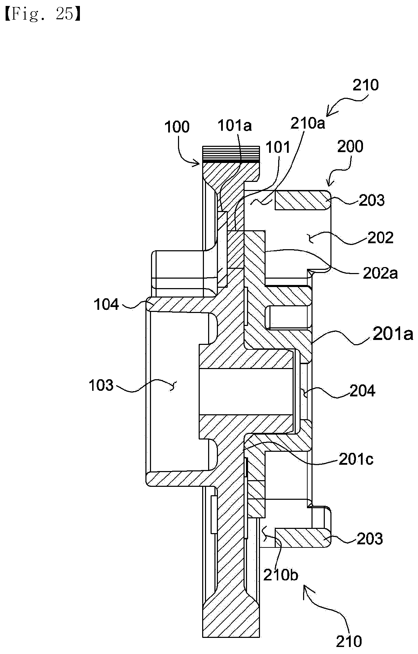

FIG. 25 is a lateral cross-sectional view in which the impurity outlet 210 (210a and 210b) is viewed.

The first impurity outlet 210a may be positioned in the upper region of the cam groove 202 and the second impurity outlet 210b may be positioned in the lower region of the cam groove 202.

As described above, the impurity outlet 210 may be a connection hole formed by cutting or removing a portion of the extension portion 203 and the bottom portion 202a and may connect the internal space of the cam groove 202 and an external space in a radial direction of the extension portion 203.

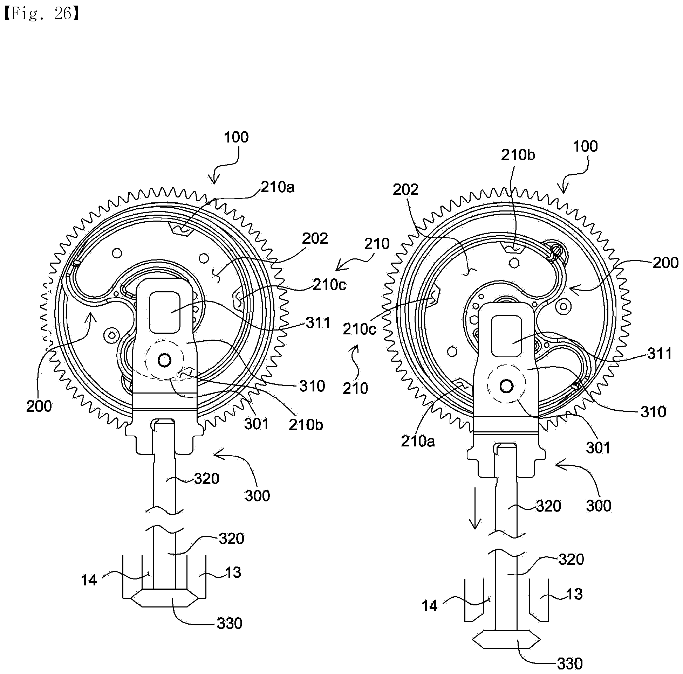

FIG. 26 shows the case in which the valve unit 300 is connected to the cam unit 200 and the valve unit 300 moves upward in response to rotation of the cam unit 200 and the power train gear 100.

As shown in FIG. 26A, before rotation power is not transmitted to the power train gear 100, the groove region 202a that is relatively far from the rotation center of the cam unit 200 may be positioned up and the cam groove region 202b that is relatively close to the rotation center may be positioned down.

The roller 301 connected to the upper stem 310 may do relative motion while contacting with the cam groove 202 and, in this regard, before power is transmitted to the roller 301, the roller 301 may be positioned in the cam groove region 202b that is relatively close to the rotation center of the cam unit 200.

Accordingly, the valve unit 300 may be positioned relatively up and, thus, the valve plate 330 may close the inlet 14.

As shown in FIG. 26B, when rotation power is transmitted to the power train gear 100, the cam groove region 202b that is relatively close to the rotation center of the cam unit 200 may be positioned up and the cam groove region 202a that is relatively far from the rotation center may be positioned down.

The roller 301 connected to the upper stem 310 may do relative motion while contacting with the cam groove 202 and, in this regard, when power is transmitted to the roller 301, the roller 301 may be positioned in the cam groove region 202a that is relatively far from the rotation center of the cam unit 200.

Accordingly, compared with the state of FIG. 26A, the valve unit 300 may be positioned relatively down and, thus, the valve plate 330 may open the inlet 14.

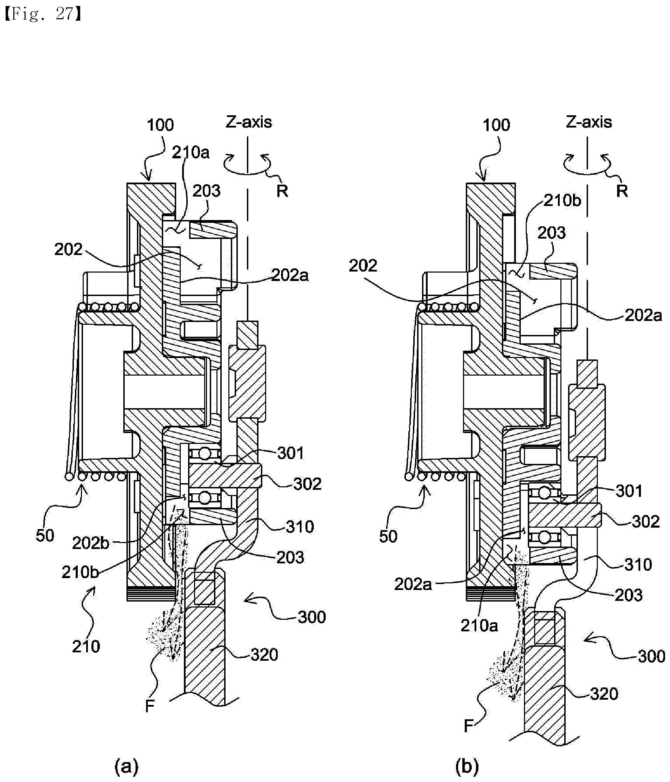

FIG. 27 illustrates a procedure in which impurity F is discharged out of the cam groove 202 through the impurity outlet 210.

As described above, the impurity F may be small particles or powders generated when a surface of the cam groove 202 is worn out while the surface of the cam groove 202 contacts the roller or small particles introduced from the outside.

As shown in FIG. 27A, when the cam unit 200 does not rotate, impurities accumulating in the lower region of the cam groove 202 may be discharged downward through the second impurity outlet 210b. That is, as shown in FIG. 24A or 26A, the cam unit 200 may not rotate yet and the valve unit 300 may not move downward and, thus, when an EGR channel is not opened, impurities may be discharged downward through the second impurity outlet 210b.

As shown in FIG. 27B, when the cam unit 200 rotates and a position thereof is reversed compared with the case of FIG. 27A, impurities accumulating in the lower region of the cam groove 202 may be discharged downward through the first impurity outlet 210a.

As shown in FIG. 24B or 26B, when the cam unit 200 rotates and the valve unit 300 moves downward to open an EGR channel, impurities may be discharged downward through the first impurity outlet 210a.

According to the diverse exemplary embodiments, the power train gear and the cam unit may be assembled and fixed rather than being integrally formed and, thus, the cam unit that is changed with various specifications may be selectively installed in the power train gear with the same specification.

Accordingly, the cam unit that is changed with various types may be installed according to a vehicle type as an installation target or customer requirements and, in this case, this change may be applied only to the cam unit and there is no change in other structures and, accordingly, manufacturing cost may be remarkably reduced and rapid reaction may be possible in response to the structural change.

The spacer and the auxiliary spacer may be provided behind the cam unit, thereby minimizing a surface contact region between a rear surface of the cam unit and a front surface of the power train gear.

Accordingly, when overall flatness of two surfaces does not match, an issue in terms of instability due to a spaced space caused by flatness mismatch may also be overcome by simply managing only flatness of contact portions of the spacers.

The protrusion portion of the cam unit may be inserted into an insertion hole of the power train gear, and an end portion of the protrusion portion may be deformed by heat and changed to a flange to be stuck by an edge of the insertion hole. Accordingly, coupling between the cam unit and the power train gear may be stably maintained.

Although, conventionally, an internal structure is complicated in that a partial tooth gear is disposed to be connected to a pinion gear, a power train gear, and an output shaft and a separate cam is connected to the output shaft, according to the present invention, power is capable of being transferred only by the pinion gear and the power train gear and the cam unit may be coupled directly to the power train gear so as to further simplify an internal structure, contributing to products in a compact size and to reduction in manufacturing costs.

The first elastic member has both torsion spring characteristic and elastic compression spring characteristic and, thus, a continuous contact state between the upper stem and the cam unit may be provided by support force based on elastic compression.

The elastic member includes the first elastic member and the second elastic member and, thus, the valve unit may be stably and rapidly restored to an original position.

The upper stem and the cam unit may linearly contact and, thus, the valve unit may be prevented from rotating based on a vertical axis, thereby effectively opening and closing a valve and enhancing the accuracy of measurement of a degree of opening the valve.

The magnet is installed on the upper stem and, thus, a position of the valve unit may be accurately measured in response to up and down movement of the valve unit.

When the upper stem and the lower stem are coupled, the flat portion and the second coupling groove may be provided on an upper lateral surface of the lower stem and may surface-contact an edge of a surrounding portion of the first coupling groove of the upper stem, thereby stably maintaining coupling between the upper stem and the lower stem.

The roller and the lower stem are positioned on the same axis so as to prevent generation of moment during force transfer and force may be stably transferred in a vertical direction, i.e., in up and down directions so as to prevent power loss.

When a motor fixing plate is installed inside the housing, the motor fixing plate may be asymmetrically formed so as to prevent confusion about right and left directions during arrangement, thereby enhancing assembly.

The support for elastically supporting the endcap of the motor may be provided in the fixing plate and, thus, the issues generated when the driving motor and the fixing plate are spaced apart may be prevented.

That is, the issue in terms of position deviation of a motor shaft, the issue in terms of position deviation of a pinion gear, the issue in terms of backlash or frictional resistance between the pinion gear and the power train gear, the issue in terms of noise and operability reduction due to the backlash or frictional resistance, other issues may be prevented.

The impurity outlet may be formed in the cam groove and, thus, fine impurities or particles generated due to contact between the roller and a surface of the cam groove may be discharged out of the cam groove.

As disclosed, the sealing member has a dual structure and, thus, exhaust gas moving from a lower portion may be prevented from moving toward the driving motor, the power train gear, the cam, and so on, thereby preventing these elements from being contaminated and operation interruption.

The extension portion may extend downward and the first sealing member may be disposed above the first sealing member and, accordingly, the first sealing member may move upward during upward movement of the lower stem but the extension portion may limit upward movement of the first sealing member, thereby maintaining a position of the first sealing member.

In addition, a plurality of extension portions may be spaced apart and the extension portion may be spaced apart from an internal wall of a moving path and, accordingly, exhaust gas may smoothly flow through the spaced space, thereby smoothly discharging the gas through the gas outlet.

## Claims

1. An exhaust gas recirculation (EGR) valve (1) for vehicles, comprising:
a housing (10) comprising an EGR channel formed therein;
a driving motor (20) and a motor shaft (21) provided in the housing (10);
a pinion gear (30) disposed at the motor shaft (21);
a power train gear (100) comprising a tooth formed on an outer edge and engaged with the pinion gear (30); and
a cam unit (200) coupled to the power train gear (100) and rotating along with the power train gear (100),
wherein the EGR channel is selectively opened and closed via up and down movement in response to rotation of the cam unit (200),
further comprising: an inserting portion (101) formed in the power train gear (100); and
a protrusion portion (201) formed on one surface of the cam unit 8200) and inserted into the inserting portion (101),
wherein the protrusion portion (201) is coupled and fixed by heat while being inserted into the inserting portion (101),
further comprising a spacer step difference portion disposed around the protrusion portion (201) and configured to space a surface of the power train gear (100) and a surface of the cam unit (200) apart from each other.

2. The EGR valve (1) of claim 1, wherein a structure with the protrusion portion (201) inserted thereinto is formed around the inserting portion (101) to reinforce a fixing state via thermal fusion and torsional rigidity.

3. The EGR valve (1) of claim 1, further comprising an auxiliary spacer step difference portion formed on the surface of the cam unit (200) or the surface of the power train gear (100), spaced apart from the spacer step difference portion, and provided in the same height level as the spacer step difference portion.

4. The EGR valve (1) of claim 1, further comprising:
a valve stem comprising a roller (301) accommodated on a cam groove (202) of the cam unit (200), wherein a contact state between the cam unit (200) and the valve stem is maintained; and
an elastic member (50) disposed between the housing (10) and the power train gear (100) and configured to provide elastic restoring force during rotation of the power train gear (100),
wherein the elastic member (50) is compressed and disposed between the housing (10) and the power train gear (100) and presses a surface of the power train gear (100) to maintain a contact state between the cam unit (200) and the valve stem.

5. The EGR valve (1) of claim 4, wherein the elastic member (50) comprises:
a body portion comprising a coil spring;
a first extension portion (52) provided at one end portion of the body portion and fixed to the power train gear (100);
a second extension portion (51) provided at the other end portion of the body portion and fixed to the housing (10),
wherein the body portion is maintained to be compressed between the housing (10) and the power train gear (100) and the power train gear (100) receives force in a direction toward the valve stem in response to elastic reaction based on compression.

6. The EGR valve (1) of claim 5, wherein:
the cam unit (200) further comprises an extension portion (203) formed on an outer edge of the cam groove (202) and extending forward; and
the extension portion (203) continuously contacts a flat portion formed on an upper stem (310) included in the valve stem; and
the extension portion (203) contacts the upper stem (310) without unsticking from one end of the flat portion of the upper stem (310) to the other end and prevents the upper stem (310) from rotating based on a virtual vertical axis of the upper stem (310) .

7. The EGR valve of claim 5, wherein:
the valve stem comprises an upper stem (310) comprising a rotation shaft with a roller (301) inserted thereinto and a lower stem (320) coupled to a lower portion of the upper stem (310) and comprising a valve plate (330) coupled to the lower stem (320); and
a vertical center of the roller (301) and a vertical center of the lower stem (320) match each other,
wherein:
the upper stem (310) comprises an upper region (310a) having a flat surface that surface-contacts the cam member as the roller (301) is inserted into the rotation shaft and a lower region (310b) comprising a bent portion (310c) connected to the upper region (310a) and coupled to the lower stem (320); and
the bent portion (310c) of the lower region (310b) is disposed in an inner portion toward the power train gear (100) compared with the upper region (310a).

8. The EGR valve (1) of claim 1, further comprising a fixing plate (40) coupled to the driving motor (20), coupled to an internal surface of the housing (10), and configured to fix the driving motor (20) to a motor accommodation portion ,
wherein the fixing plate (40) comprises a through hole (41) through which a central portion of the driving motor (20) is disposed and a support formed around the through hole to contact the driving motor (20),
wherein the fixing plate (40) comprises:
a plate portion (40a) with a through hole (41) formed in a center thereof;
a bent portion (40b) extending from an edge of the plate portion (40a), bent downward, and formed on a front surface of the driving motor (20); and
an extension portion (45a, 45b) formed adjacently to the bent portion (40b) and inserted into a fixing groove (15) formed on the internal surface of the housing (10).

9. The EGR valve (1) of claim 8, wherein:
the extension portion (45a, 45b) comprises a first extension portion (45a) extending toward one side of the plate portion (40a), and a second extension portion (45b) extending toward the other side of the plate portion (40a);
the first extension portion (45a) and the second extension portion (45b) are different in a shape or an extension length and are asymmetrical based on a center of the through hole (41); and
a region of the fixing groove (15), to which the first extension portion (45a) is installed, and a region of the fixing groove (15), to which the second extension portion 845b) is installed, are asymmetrical based on a center of the fixing groove (15).

10. The EGR valve (1) of claim 1, further comprising a valve stem,
wherein:
the valve stem comprises an upper stem (310) and a lower stem (320) engaged with the upper stem (310) and including a valve plate (330) provided on a lower portion of the lower stem (320);
a lower region of the upper stem (310), engaged with the lower stem (320), is bent toward one side compared with an upper region; and
a first coupling groove (315) and a second coupling groove (326) are engaged with each other below the upper stem (310) and above the lower stem (320),
wherein:
a lower portion of the first coupling groove (315) formed below the upper stem is opened;
an extension portion extending toward the first coupling groove (315) is formed at one side of the first coupling groove (315); and
the extension portion and the second coupling groove (326) surface-contact each other, further comprising:
a through hole (312) formed in an upper region of the upper stem (310); and
a magnet (311) configured to indicate a state and position of a stem disposed in the thorough hole (312).

11. The EGR valve of claim 1, further comprising an impurity outlet (210) disposed in the cam unit (200) and configured to connect internal and external portions of a cam groove (202) to guide impurity in the cam groove (202) to be externally discharged.

12. The EGR valve (1) of claim 1, further comprising:
a valve stem moveably provided in the housing (10);
a first sealing member (350) installed in the housing (10) and disposed to surround the valve stem; and
a second sealing member (360) installed in the housing (10), disposed to surround the valve stem, and disposed above the first sealing member (350); and
a gas exhaust channel (13b) disposed at one side of the housing (10) and configured to discharge gas directed toward a valve driver out of the housing (10),
wherein an arrangement height level of the gas exhaust channel (13b) is between an arrangement height level of the first sealing member (350) and an arrangement height level of the second sealing member (360).

13. The EGR valve (1) of claim 12, wherein the second sealing member comprises:
a fixing portion (361) fixed to an accommodation portion (132);
a contact portion (362) coupled or connected to the fixing portion (361) or extending from the fixing portion (361) and surrounding an outer circumferential surface of a valve stem to contact the outer circumferential surface of the valve stem; and
an extension portion (363) coupled or connected to the fixing portion (361) or extending from the fixing portion (361), provided separately from the contact portion (362), and extending downward in a direction toward a first sealing member (350).

## Patentansprüche

1. Abgasrückführungs (AGR)-Ventil (1) für Fahrzeuge, umfassend:
ein Gehäuse (10), das einen darin ausgebildeten AGR-Kanal umfasst;
einen Antriebsmotor (20) und eine Antriebswelle (21), die in dem Gehäuse (10) vorgesehen sind;
ein Zahntriebwerk (30), das an der Antriebswelle (21) angeordnet ist;
ein Antriebsstrangzahnrad (100), das einen Zahn umfasst, der an einem Außenrand ausgebildet ist und mit dem Zahntriebwerk (30) eingreift; und
eine Nockeneinheit (200), die mit dem Antriebsstrangzahnrad (100) gekoppelt ist und mit dem Antriebsstrangzahnrad (100) dreht,
wobei der AGR-Kanal über eine Aufwärts- und Abwärtsbewegung ansprechend auf eine Drehung der Nockeneinheit (200) selektiv geöffnet und geschlossen wird,
weiterhin umfassend: einen Einsatzabschnitt (101), der in dem Antriebsstrangzahnrad (100) ausgebildet ist; und
einen Vorsprungabschnitt (201), der an einer Oberfläche der Nockeneinheit (200) ausgebildet ist und in den Einsatzabschnitt (101) eingesetzt wird,
wobei der Vorsprungabschnitt (201) gekoppelt und durch Wärme befestigt wird, während er in den Einsatzabschnitt (101) eingesetzt wird,
weiterhin umfassend einen Abstandhalter-Schrittdifferenz-Abschnitt, der um den Vorsprungabschnitt (201) angeordnet ist und dafür ausgelegt ist, eine Oberfläche des Antriebsstrangzahnrads (100) und eine Oberfläche der Nockeneinheit (200) voneinander zu beabstanden.

2. AGR-Ventil (1) nach Anspruch 1, wobei eine Struktur mit dem darin eingesetzten Vorsprungabschnitt (201) um den Einsatzabschnitt (101) ausgebildet ist, um einen Befestigungszustand über thermische Fusion und Torsionssteifigkeit zu verstärken.

3. AGR-Ventil (1) nach Anspruch 1, weiterhin umfassend einen Hilfs-Abstandhalter-Schrittdifferenz-Abschnitt, der an der Oberfläche der Nockeneinheit (200) oder der Oberfläche des Antriebsstrangzahnrads (100) von dem Abstandhalter-Schrittdifferenz-Abschnitt beabstandet ausgebildet ist und auf derselben Höhe wie der Abstandhalter-Schrittdifferenz-Abschnitt vorgesehen ist.

4. AGR-Ventil (1) nach Anspruch 1, weiterhin umfassend:
einen Ventilschaft, der eine Rolle (301) umfasst, die an einer Nockennut (202) der Nockeneinheit (200) angeordnet ist, wobei ein Kontaktzustand zwischen der Nockeneinheit (200) und dem Ventilschaft aufrechterhalten wird; und
ein elastisches Element (50), das zwischen dem Gehäuse (10) und dem Antriebsstrangzahnrad (100) angeordnet und dafür ausgelegt ist, während der Drehung des Antriebsstrangzahnrads (100) eine elastische Rückstellkraft bereitzustellen,
wobei das elastische Element (50) komprimiert und zwischen dem Gehäuse (10) und dem Antriebsstrangzahnrad (100) angeordnet ist und auf eine Oberfläche des Antriebsstrangzahnrads (100) drückt, um einen Kontaktzustand zwischen der Nockeneinheit (200) und dem Ventilschaft aufrechtzuerhalten.

5. AGR-Ventil (1) nach Anspruch 4, wobei das elastische Element (50) umfasst:
einen Körperabschnitt, der eine Schraubenfeder umfasst;
einen ersten Verlängerungsabschnitt (52), der an einem Endabschnitt des Körperabschnitts vorgesehen und an dem Antriebsstrangzahnrad (100) befestigt ist;
einen zweiten Verlängerungsabschnitt (51), der an dem anderen Endabschnitt des Körperabschnitts vorgesehen und an dem Gehäuse (10) befestigt ist,
wobei der Körperabschnitt dafür vorgesehen ist, zwischen dem Gehäuse (10) und dem Antriebsstrangzahnrad (100) komprimiert zu werden, und das Antriebsstrangzahnrad (100) eine Kraft in einer Richtung zu dem Ventilschaft ansprechend auf auf eine elastische Reaktion auf der Grundlage von Kompression erhält.

6. AGR-Ventil (1) nach Anspruch 5, wobei:
die Nockeneinheit (200) weiterhin einen Verlängerungsabschnitt (203) umfasst, der an einem Außenrand der Nockennut (202) ausgebildet ist und sich nach vorn erstreckt; und
der Verlängerungsabschnitt (203) in ständigem Kontakt mit einem flachen Abschnitt steht, der an einem oberen Schaft (310) ausgebildet ist, der von dem Ventilschaft umfasst wird; und
der Verlängerungsabschnitt (203) mit dem oberen Schaft (310) in Kontakt steht, ohne sich von einem Ende des flachen Abschnitts des oberen Schafts (310) zu dem anderen Ende zu lösen, und verhindert, dass der obere Schaft (310) bezogen auf eine virtuelle vertikale Achse des oberen Schafts (310) dreht.

7. AGR-Ventil nach Anspruch 5, wobei:
der Ventilschaft einen oberen Schaft (310) umfasst, der eine drehende Welle mit einer darin eingesetzten Rolle (301) sowie einen unteren Schaft (320) umfasst, der mit einem unteren Abschnitt des oberen Schafts (310) gekoppelt ist, und eine Ventilplatte (330) umfasst, die mit dem unteren Schaft (320) gekoppelt ist; und
ein vertikaler Mittelpunkt der Rolle (301) und ein vertikaler Mittelpunkt des unteren Schafts (320) einander entsprechen,
wobei:
der obere Schaft (310) einen oberen Bereich (310a) mit einer flachen Oberfläche, die in Oberflächenkontakt mit dem Nockenelement steht, wenn die Rolle (301) in die drehende Welle eingesetzt wird, sowie einen unteren Bereich (310b) umfasst, der einen gekrümmten Abschnitt (310c) umfasst, der mit dem oberen Bereich (310a) verbunden ist und mit dem unteren Schaft (320) gekoppelt ist; und
der gekrümmte Abschnitt (310c) des unteren Bereichs (310b) in einem inneren Abschnitt, der im Vergleich zu dem oberen Bereich (310a) in Richtung des Antriebsstrangzahnrads (100) liegt, angeordnet ist.

8. AGR-Ventil (1) nach Anspruch 1, weiterhin umfassend eine Befestigungsplatte (40), die mit dem Antriebsmotor (20) gekoppelt ist, an eine innere Oberfläche des Gehäuses (10) gekoppelt ist und dafür ausgelegt ist, den Antriebsmotor (20) an einem Motoraufnahmeabschnitt zu befestigen,
wobei die Befestigungsplatte (40) eine durchgehende Öffnung (41), durch die ein zentraler Abschnitt des Antriebsmotors (20) angeordnet ist, und einen Träger umfasst, der um die durchgehende Öffnung ausgebildet ist, so dass er in Kontakt mit dem Antriebsmotor (20) steht,
wobei die Befestigungsplatte (40) umfasst:
einen Plattenabschnitt (40a) mit einer durchgehenden Öffnung (41), die in dessen Mittelpunkt ausgebildet ist;
einen gekrümmten Abschnitt (40b), der sich von einem Rand des Plattenabschnitts (40a) nach unten gekrümmt erstreckt und an einer vorderen Oberfläche des Antriebsmotors (20) ausgebildet ist; und
einen Verlängerungsabschnitt (45a, 45b), der angrenzend an den gekrümmten Abschnitt (40b) ausgebildet ist und in eine Befestigungsnut (15) eingesetzt ist, die an der inneren Oberfläche des Gehäuses (10) ausgebildet ist.

9. AGR-Ventil (1) nach Anspruch 8, wobei:
der Verlängerungsabschnitt (45a, 45b) einen ersten Verlängerungsabschnitt (45a), der sich zu einer Seite des Plattenabschnitts (40a) erstreckt, und einen zweiten Verlängerungsabschnitt (45b) umfasst, der sich zu der anderen Seite des Plattenabschnitts (40a) erstreckt;
der erste Verlängerungsabschnitt (45a) und der zweite Verlängerungsabschnitt (45b) sich in der Form oder der Länge der Verlängerung unterscheiden und asymmetrisch bezogen auf einen Mittelpunkt der durchgehenden Öffnung (41) sind; und
ein Bereich der Befestigungsnut (15), an dem der erste Verlängerungsabschnitt (45a) angebracht ist, und ein Bereich der Befestigungsnut (15), an dem der zweite Verlängerungsabschnitt (45b) angebracht ist, asymmetrisch bezogen auf einen Mittelpunkt der Befestigungsnut (15) sind.

10. AGR-Ventil (1) nach Anspruch 1, weiterhin umfassend einen Ventilschaft, wobei:
der Ventilschaft einen oberen Schaft (310) und einen unteren Schaft (320), der mit dem oberen Schaft (310) eingreift, umfasst, und eine Ventilplatte (330) umfasst, die an einem unteren Abschnitt des unteren Schafts (320) vorgesehen ist;
ein unterer Bereich des oberen Schafts (310), der mit dem unteren Schaft (320) eingreift, im Vergleich zu einem oberen Bereich zu einer Seite gekrümmt ist; und
eine erste Kopplungsnut (315) und eine zweite Kopplungsnut (326) unterhalb des oberen Schafts (310) und oberhalb des unteren Schafts (320) miteinander eingreifen,
wobei:
ein unterer Abschnitt der ersten Kopplungsnut (315), der unterhalb des oberen Schafts ausgebildet ist, geöffnet wird;
ein Verlängerungsabschnitt, der sich zu der ersten Kopplungsnut (315) erstreckt, an einer Seite der ersten Kopplungsnut (315) ausgebildet ist; und
der Verlängerungsabschnitt und die zweite Kopplungsnut (326) miteinander in Oberflächenkontakt stehen,
weiterhin umfassend:
eine durchgehende Öffnung (312), die in einem oberen Bereich des oberen Schafts (310) ausgebildet ist; und
einen Magneten (311), der dafür ausgelegt ist, einen Zustand und eine Position eines Schafts anzuzeigen, der in der durchgehenden Öffnung (312) angeordnet ist.

11. AGR-Ventil nach Anspruch 1, weiterhin umfassend einen Verschmutzungs-Auslass (210), der in der Nockeneinheit (200) angeordnet und dafür ausgelegt ist, innere und äußere Abschnitte einer Nockennut (202) zu verbinden, um eine Verschmutzung in der Nockennut (202) so zu leiten, dass sie nach außen abgeführt wird.

12. AGR-Ventil (1) nach Anspruch 1, weiterhin umfassend:
einen Ventilschaft, der bewegbar in dem Gehäuse (10) vorgesehen ist;
ein erstes Dichtelement (350), das in dem Gehäuse (10) installiert und so angeordnet ist, dass es den Ventilschaft umgibt; und
ein zweites Dichtelement (360), das in dem Gehäuse (10) installiert ist, so angeordnet ist, dass es den Ventilschaft umgibt, und oberhalb des ersten Dichtelements (350) angeordnet ist; und
einen Gasabfuhrkanal (13b), der an einer Seite des Gehäuses (10) angeordnet und dafür ausgelegt ist, Gas, das auf einen Ventilantrieb gerichtet ist, aus dem Gehäuse (10) abzuführen,
wobei ein Anordnungshöhenniveau des Gasabfuhrkanals (13b) zwischen einem Anordnungshöhenniveau des ersten Dichtelements (350) und einem Anordnungshöhenniveau des zweiten Dichtelements (360) liegt.

13. AGR-Ventil (1) nach Anspruch 12, wobei das zweite Dichtelement umfasst:
einen Befestigungsabschnitt (361), der an einem Aufnahmeabschnitt (132) befestigt ist;
einen Kontaktabschnitt (362), der mit dem Befestigungsabschnitt (361) gekoppelt oder verbunden ist oder sich von dem Befestigungsabschnitt (361) erstreckt und eine äußere Umfangsfläche eines Ventilschafts umgibt, so dass er mit der äußeren Umfangsfläche des Ventilschafts in Kontakt steht; und
einen Verlängerungsabschnitt (363), der mit dem Befestigungsabschnitt (361) gekoppelt oder verbunden ist oder sich von dem Befestigungsabschnitt (361) erstreckt und getrennt von dem Kontaktabschnitt (362) vorgesehen ist und sich nach unten in einer Richtung zu einem ersten Dichtelement (350) erstreckt.

## Revendications

1. Vanne (1) de recirculation des gaz d'échappement (EGR) pour véhicules, comportant :
- un boîtier (10) comportant un canal EGR formé à l'intérieur ;
- un moteur d'entraînement (20) et un arbre de moteur (21) fourni dans le boîtier (10) ;
- un engrenage à pignons (30) disposé au niveau de l'arbre de moteur (21) ;
- un engrenage de groupe motopropulseur (100) comportant une dent formée sur un bord extérieur et engagée avec l'engrenage à pignons (30) ; et
- une unité de came (200) couplée à l'engrenage de groupe motopropulseur (100) et tournant conjointement avec l'engrenage de groupe motopropulseur (100),
dans laquelle le canal EGR est ouvert et fermé sélectivement par le biais d'un mouvement de haut en bas en réponse à la rotation de l'unité de came (200),
comportant en outre :
- une partie d'insertion (101) formée dans l'engrenage de groupe motopropulseur (100) ; et
- une partie en saillie (201) formée sur une surface de l'unité de came (200) et insérée dans la partie d'insertion (101),
où la partie en saillie (201) est couplée et fixée par la chaleur tout en étant insérée dans la partie d'insertion (101),
comportant en outre une partie différentielle de pas d'écartement disposée autour de la partie en saillie (201) et configurée pour écarter une surface de l'engrenage de groupe motopropulseur (100) et une surface de l'unité de came (200) l'une de l'autre.

2. Vanne EGR (1) selon la revendication 1, dans laquelle une structure avec la partie en saillie (201) insérée à l'intérieur de celle-ci est formée autour de la partie d'insertion (101) pour renforcer un état de fixation par le biais d'une fusion thermique et d'une rigidité torsionnelle.

3. Vanne EGR (1) selon la revendication 1, comportant en outre une partie différentielle de pas d'écartement auxiliaire formée sur la surface de l'unité de came (200) ou la surface de l'engrenage de groupe motopropulseur (100), écartée de la partie différentielle de pas d'écartement, et disposée au même niveau de hauteur que la partie différentielle de pas d'écartement.

4. Vanne EGR (1) selon la revendication 1, comportant en outre :
- une tige de vanne comportant un galet (301) logé dans une rainure de came (202) de l'unité de came (200), où un état de contact entre l'unité de came (200) et la tige de vanne est maintenu ; et
- un élément élastique (50) disposé entre le boîtier (10) et l'engrenage de groupe motopropulseur (100) et configuré pour fournir une force de rappel élastique pendant la rotation de l'engrenage de groupe motopropulseur (100),
dans laquelle l'élément élastique (50) est comprimé et disposé entre le boîtier (10) et l'engrenage de groupe motopropulseur (100) et presse une surface de l'engrenage de groupe motopropulseur (100) pour maintenir un état de contact entre l'unité de came (200) et la tige de vanne.

5. Vanne EGR (1) selon la revendication 4, dans laquelle l'élément élastique(50) comporte :
- une partie de corps comportant un ressort hélicoïdal ;
- une première partie d'extension (52) fournie au niveau d'une partie d'extrémité de la partie de corps et fixée à l'engrenage de groupe motopropulseur (100) ;
- une seconde partie d'extension fournie au niveau de l'autre partie d'extrémité de la partie de corps et fixée au boîtier (100),
où la partie de corps est maintenue pour être comprimée entre le boîtier (10) et l'engrenage de groupe motopropulseur (100) et l'engrenage de groupe motopropulseur (100) reçoit une force dans une direction vers la tige de vanne en réponse à une réaction élastique basée sur la compression.

6. Vanne EGR (1) selon la revendication 5, dans laquelle :
- l'unité de came (200) comporte en outre une partie d'extension (203) formée sur un bord extérieur de la rainure de came (202) et s'étendant vers l'avant ; et
- la partie d'extension (203) vient en contact continu avec une partie plate formée sur une tige supérieure (300) comprise dans la tige de vanne ; et
- la partie d'extension (203) vient en contact avec la tige supérieure (310) sans se décoller d'une extrémité de la partie plate de la tige supérieure (310) vers l'autre extrémité et empêche la tige supérieure (310) de tourner par rapport à un axe vertical virtuel de la tige supérieure (310) .

7. Vanne EGR selon la revendication 5, dans laquelle :
- la tige de vanne comporte une tige supérieure (310) comportant un arbre de rotation avec un galet (301) inséré à l'intérieur et une tige inférieure (320) couplée à une partie inférieure de la tige supérieure (310) et comportant une plaque de vanne (330) couplée à la tige inférieure (320) ; et
- un centre vertical du galet (301) et un centre vertical de la tige inférieure (320) coïncident l'un avec l'autre ;
où :
- la tige supérieure (310) comporte une région supérieure (310a) présentant une surface plate qui vient en contact de surface avec l'élément de came lorsque le galet (301) est inséré dans l'arbre de rotation et une région inférieure (310b) comportant une partie courbée (310c) reliée à la région supérieure (310a) et couplée à la tige inférieure (320) ; et
- la partie courbée (310c) de la région inférieure (310b) est disposée dans une partie intérieure vers l'engrenage de groupe motopropulseur (100) par rapport à la région supérieure (310a).

8. Vanne EGR (1) selon la revendication 1, comportant en outre une plaque de fixation (40) couplée au moteur d'entraînement (20), couplée à une surface interne du boîtier (10), et configurée pour fixer le moteur d'entraînement (20) à une partie de logement de moteur,
dans laquelle la plaque de fixation (40) comporte un trou traversant (41) à travers lequel une partie centrale du moteur d'entraînement (20) est disposée et un support formé autour du trou débouchant pour venir en contact avec le moteur d'entraînement (20),
où la plaque de fixation (40) comporte :
- une partie de plaque (40a) avec un trou débouchant (41) formé dans un centre de celle-ci ;
- une partie courbée (40b) s'étendant depuis un bord de la partie de plaque (40a), courbée vers le bas, et formée sur une surface avant du moteur d'entraînement (20) ; et
- une partie d'extension (45a, 45b) formée de manière adjacente à la partie courbée (40b) et insérée dans une rainure de fixation (15) formée sur la surface interne du boîtier (10).

9. Vanne EGR (1) selon la revendication 8, dans laquelle :
- la partie d'extension (45a, 45b) comporte une première partie d'extension (45a) s'étendant vers un côté de la partie de plaque (40a), et une seconde partie d'extension (45b) s'étendant vers l'autre côté de la partie de plaque (40a) ;
- la première partie d'extension (45a) et la seconde partie d'extension (45b) sont de forme ou de longueur d'extension différente et sont asymétriques par rapport à un centre du trou débouchant (41) ; et
- une région de la rainure de fixation (15), sur laquelle la première partie d'extension (45a) est installée, et une région de la rainure de fixation (15), sur laquelle la seconde partie d'extension (45b) est installée, sont asymétriques par rapport à un centre de la rainure de fixation (15).

10. Vanne EGR (1) selon la revendication 1, comportant en outre une tige de vanne, dans laquele :
- la tige de vanne comporte une tige supérieure (310) et une tige inférieure (320) engagée avec la tige supérieure (310) et comprenant une plaque de vanne (330) fournie sur une partie inférieure de la tige inférieure (320) ;
- une région inférieure de la tige supérieure (310), engagée avec la tige inférieure (320), est courbée vers un côté par rapport à une région supérieure ; et
- une première rainure de couplage (315) et une seconde rainure de couplage (326) sont engagées l'une avec l'autre en dessous de la tige supérieure (310) et au-dessus de la tige inférieure (320),
où :
- une partie inférieure de la première rainure de couplage (315) formée en dessous de la tige supérieure est ouverte ;
- une partie d'extension s'étendant vers la première rainure de couplage (315) est formée au niveau d'un côté de la première rainure de couplage (315) ; et
- la partie d'extension et la seconde rainure de couplage (326) viennent en contact de surface l'une avec l'autre, comportant en outre :
- un trou débouchant (312) formé dans une région supérieure de la tige supérieure (310) ; et
- un aimant (311) configuré pour indiquer un état et une position d'une tige disposée dans le trou débouchant (312).

11. Vanne EGR selon la revendication 1, comportant en outre une sortie d'impuretés (210) disposée dans l'unité de came (200) et configurée pour relier des parties interne et externe d'une rainure de came (202) afin de guider les impuretés dans la rainure de came (202) pour être refoulées vers l'extérieur.

12. Vanne EGR (1) selon la revendication 1, comportant en outre :
- une tige de vanne disposée de manière mobile dans le boîtier (10) ;
- un premier élément d'étanchéité (350) installé dans le boîtier (10) et disposé pour entourer la tige de vanne ; et
- un second élément d'étanchéité (360) installé dans le boîtier (10), disposé pour entourer la tige de vanne, et disposé au-dessus du premier élément d'étanchéité (350), et
- un canal d'échappement des gaz (13b) disposé au niveau d'un côté du boîtier (10) et configuré pour refouler les gaz dirigés vers un circuit de sortie de vanne en dehors du boîtier (10),
où un niveau de hauteur d'agencement du canal d'échappement des gaz (13b) se trouve entre un niveau de hauteur d'agencement du premier élément d'étanchéité (350) et un niveau de hauteur d'agencement du second élément d'étanchéité (360).

13. Vanne EGR (1) selon la revendication 12, dans laquelle le second élément d'étanchéité comporte :
- une partie de fixation (361) fixée à une partie de logement (132) ;
- une partie de contact (362) couplée ou reliée à la partie de fixation (361) ou s'étendant depuis la partie de fixation (361) et entourant une surface circonférentielle extérieure d'une tige de vanne pour venir en contact avec la surface circonférentielle extérieure de la tige de vanne ; et
- une partie d'extension (363) couplée ou reliée à la partie de fixation (361) ou s'étendant depuis la partie de fixation (361), fournie séparément de la partie de contact (362), et s'étendant vers le bas dans une direction vers un premier élément d'étanchéité (360).
